# EUROPEAN PATENT SPECIFICATION

(11) **EP 3 882 112 B1**
(45) Date of publication and mention of the grant of the patent: **26.07.2023**
(21) Application number: 21159919.6
(22) Date of filing: 01.03.2021
(51) Int. Cl.: B62J 9/23, B62J 9/27

(54) **SIDE CASE DEVICE, MOBILE OBJECT INCLUDING SAME, SIDE CASE AND SUPPORT DEVICE**
SEITENKOFFER, MOBILER GEGENSTAND MIT DEMSELBEN, SEITENKOFFER UND HALTEVORRICHTUNG
DISPOSITIF DE BOÎTIER LATÉRAL, OBJET MOBILE COMPRENANT CE DISPOSITIF, BOÎTIER LATÉRAL ET DISPOSITIF DE SUPPORT

(30) Priority: 19.03.2020 JP 2020050047
(43) Date of publication of application: 22.09.2021
(73) Proprietor: Yamaha Hatsudoki Kabushiki Kaisha, Iwata-shi, Shizuoka 438-8501 (JP)
(72) Inventor: TERAMOTO, Yoshinori, Iwata-shi, Shizuoka-ken 438-8501 (JP); MIYAMOTO, Yoshihiro, Iwata-shi, Shizuoka-ken 438-8501 (JP)
(74) Representative: Grünecker Patent- und Rechtsanwälte PartG mbB

(56) References cited:
- EP-A1- 3 798 109
- JP-A- 2002 255 077
- US-A- 3 920 140

## Description

The present invention relates to a side case device, a mobile object including the side case device and a side case.

The prior art document JP 2002 255077 A, which shows the features of the preamble of claim 1 and 10, discloses a baggage fitting structure for a motorcycle having first fitting part that protrudes to the side direction of a vehicle body almost horizontally at a position over a rear wheel of the motorcycle in the lower part of a seat side part. A second fitting part is provided on the rear end of a step holder positioned under the first fitting part and at the side of the rear wheel. The first fitting part and the second fitting part are provided with shaft parts and engagement parts on ends thereof, respectively. Protruding positions of the engagement parts to the side direction are made to be almost the same in the vertical direction. Thus, a bag can be supported almost straight and an appearance by making a bag fitting part inconspicuous can be improved and a protruding amount to the side direction at fitting can be reduced.

In a straddled vehicle such as a motorcycle, side cases may be respectively provided at a right side portion and a left side portion of the vehicle in order to increase luggage capacity. For example, JP 2015-649 A describes a motorcycle having a pair of left and right side bags at the right side portion and the left side portion of rear parts of the vehicle.

Specifically, in the motorcycle, upper portions of the main bodies of the left and right side bags are fixed to a seat frame via side bag brackets. Further, lower front portions of the main bodies of the bags are fixed to step plates via elastic members, and inner rear portions are fixed to side surface portions of rear fenders via elastic members. In this manner, in the motorcycle described in JP 2015-649 A, each of the left and right side bags is supported at the vehicle main body with three or more portions of the side bag being fixed.

As a phenomenon of vibration that occurs in a motorcycle during traveling, the weave mode that includes swinging of a vehicle body in a left-and-right direction has been known. The weave mode is a phenomenon of vibration that is caused by a combination of rotational vibration about a yaw axis of the vehicle body and rotational vibration about a roll axis of the vehicle body and is likely to occur in a relatively high speed range.

The likelihood of an occurrence of the weave mode depends on the shape of the motorcycle. For example, in the above-mentioned motorcycle, the speed at which the weave mode occurs with the side bags attached is lower than the speed at which the weave mode occurs with the side bags not attached. Therefore, the traveling speed of the motorcycle having the side bags is restricted to a relatively low speed range. In this manner, the weave mode caused by a case for luggage is not limited to occur in a motorcycle but may occur in another mobile object such as a four-wheeled automobile and a boat.

An object of the present invention is to provide a side case device, a mobile object including the side case device and a side case that can suppress an occurrence of a weave mode while increasing luggage capacity.

According to the present invention said object is solved by side case device having the features of independent claim 1. Moreover, according to the present invention said object is solved by side case having the features of independent claim 10. Preferred embodiments are laid down in the dependent claims.
(1) A side case device according to one aspect of the present teaching that is attachable to a mobile object includes a side case that is configured to be attached to a side portion of the mobile object to be swingable leftwardly and rightwardly, is configured to be detached from the side portion of the mobile object and has a concave portion that opens forwardly, a shaft member configured to be fixable to the side portion of the mobile object to extend upwardly and downwardly, a rotation member that is supported at the shaft member to be rotatable about the shaft member and has an insertion portion to be inserted into the concave portion of the side case, and a damper provided between the shaft member and the rotation member, wherein with the insertion portion inserted into the concave portion, a cross section, which is orthogonal to an axial center of the shaft member, of the concave portion and the insertion portion is defined, an opening end of the concave portion in the cross section is defined as a first position, and a second position and a third position that are closer to a bottom portion of the concave portion than the first position are defined in this order, and the concave portion and the insertion portion are formed such that a size of a clearance between the concave portion and the insertion portion in the cross section gradually decreases from the first position to the second position and gradually increases from the second position to the third position.

In the side case device, the side case is attached to the side portion of the mobile object to be swingable leftwardly and rightwardly or is detached from the side portion of the mobile object. Further, the shaft member is fixed to the mobile object to extend upwardly and downwardly. The rotation member is supported at the shaft member via the damper. The rotation member is rotatable about the shaft member. The insertion portion of the rotation member is inserted into the concave portion of the side case. With the insertion portion inserted into the concave portion, the clearance is formed between the concave portion and the insertion portion.

When the side case swings leftwardly and rightwardly of the mobile object, the insertion portion swings about the axial center of the shaft member together with the side case while being inserted into the concave portion. Thus, a relative rotational force is generated between the rotation member and the shaft member. Part of this rotational force is absorbed by the damper. Therefore, swinging of the side case is attenuated.

In the cross section of the concave portion and the insertion portion that is orthogonal to the axial center of the shaft member, the size of the clearance between the concave portion and the insertion portion decreases gradually from the first position to the second position and increases gradually from the second position to the third position. In this case, because rotation of the insertion portion about the second position is allowed in the concave portion in the above-mentioned cross section, the contact state where the concave portion is in contact with the insertion portion is likely to be maintained at the second position when the insertion portion swings. Thus, when the side case swings, repeated contact and separation between the concave portion and the insertion portion is suppressed, and the shock generated between the concave portion and the insertion portion is mitigated. Therefore, deterioration of the concave portion and the insertion portion is suppressed, and swinging of the side case is smoothly attenuated.

As a result, the mobile object that can suppress an occurrence of the weave mode while increasing luggage capacity is realized.

(2) The concave portion may have first and second inner surfaces, which sandwich the insertion portion of the rotation member and face each other in the cross section with the insertion portion inserted into the concave portion, and the concave portion may be formed such that a distance between the first inner surface and the second inner surface in the cross section gradually decreases from the first position to the second position and gradually increases from the second position to the third position.

In this case, in the cross section of the concave portion and the insertion portion, the insertion portion can be formed to extend in the direction directed from the opening end toward the bottom portion of the concave portion by a constant width while being inserted into the concave portion. Thus, the configuration of the rotation member is simplified.

(3) The insertion portion may have first and second outer surfaces respectively facing the first and second inner surfaces in the concave portion with the insertion portion inserted into the concave portion, and the concave portion and the insertion portion may be formed such that at least one of the first and second inner surfaces linearly comes into contact with at least one of the first and second outer surfaces when the side case is in a predetermined attitude with respect to the mobile object.

In this case, when the side case is in a predetermined attitude with respect to the mobile object, at least one of the first and second inner surfaces linearly comes into contact with at least one of the first and second outer surfaces. Thus, the supporting state of the side case when the side case is in the predetermined attitude with respect to the mobile object is stabilized.

(4) The first and second inner surfaces of the concave portion of the side case may be formed of an elastic object, and the insertion portion may be formed of metal. In this case, the insertion portion formed of metal is inserted between the first and second inner surfaces formed of an elastic object. Thus, when the side case swings leftwardly and rightwardly with the inserted portion inserted into the concave portion, the shock generated between the concave portion and the insertion portion is reduced. Further, because the insertion portion is formed of metal, strength required to support the side case is ensured in the rotation member.

(5) The side case device may further include a coupling member that couples the damper to the rotation member, and the rotation member may be configured to be attachable to and detachable from the coupling member. Thus, the rotation member can be easily replaced in a case where the insertion portion of the rotation member is deteriorated.

(6) The coupling member may have a rotation restrictor that restricts rotation of the rotation member with respect to the shaft member to a predetermined angular range.

In this case, an excessive rotational force is prevented from being exerted on the damper, and deterioration of the damper can be suppressed.

(7) A bottom portion of the concave portion may be configured such that a tip of the insertion portion is fittable to the bottom portion with the insertion portion inserted into the concave portion, and a relative movement between the rotation member and the side case may be restricted with the tip of the insertion portion fitted to the bottom portion of the concave portion.

With the above-mentioned configuration, in a case where the tip of the insertion portion is fitted to the bottom portion of the concave portion, the side case is fixed rigidly to the side portion of the mobile object.

(8) The damper may include an inner cylinder into which the shaft member is inserted, a rubber bush provided to surround an outer peripheral surface of the inner cylinder, and an outer cylinder that is provided to surround the rubber bush and fixed to the rotation member. Thus, the rotation of the side case can be attenuated with a simple configuration.

(9) A mobile object according to another aspect of the present teaching includes the above-mentioned side case device. Thus, in the mobile object, an occurrence of the weave mode can be suppressed while luggage capacity is increased. Therefore, the mobile object is not restricted in regard to the traveling speed that causes the weave mode.

(10) A side case according to yet another aspect of the present teaching is attachable to a mobile object using a support device, wherein the support device includes a shaft member configured to be fixable to a side portion of the mobile object to extend upwardly and downwardly, a rotation member that is supported at the shaft member to be rotatable about the shaft member and has an insertion portion, and a damper provided between the shaft member and the rotation member, the side case includes a case main body that is configured to be attached to the side portion of the mobile object to be swingable leftwardly and rightwardly, is configured to be detached from the side portion of the mobile object and has a concave portion that opens forwardly and into which the insertion portion is to be inserted, with the insertion portion inserted into the concave portion, a cross section, which is orthogonal to an axial center of the shaft member, of the concave portion and the insertion portion is defined, an opening end of the concave portion in the cross section is defined as a first position, and a second position and a third position that are closer to a bottom portion of the concave portion than the first position are defined in this order, and a size of a clearance between the concave portion and the insertion portion in the cross section gradually decreases from the first position to the second position and gradually increases from the second position to the third position.

In the side case, the case main body is attached to the side portion of the mobile object to be swingable leftwardly and rightwardly using the support device. The insertion portion of the rotation member is inserted into the concave portion of the case main body. With the insertion portion inserted into the concave portion, the clearance is formed between the concave portion and the insertion portion.

When the side case swings leftwardly and rightwardly of the mobile object, the insertion portion swings about the axial center of the shaft member together with the case main body while being inserted into the concave portion. Thus, a relative rotational force is generated between the rotation member and the shaft member. Part of this rotational force is absorbed by the damper. Therefore, swinging of the side case is attenuated.

In the cross section of the concave portion and the insertion portion that is orthogonal to the axial center of the shaft member, the size of the clearance between the concave portion and the insertion portion decreases gradually from the first position to the second position and increases gradually from the second position to the third position. In this case, because rotation of the insertion portion about the second position is allowed in the concave portion in the above-mentioned cross section, the contact state where the concave portion is in contact with the insertion portion is likely to be maintained at the second position when the insertion portion swings.

Thus, when the side case swings, repeated contact and separation between the concave portion and the insertion portion is suppressed, and the shock generated between the concave portion and the insertion portion is mitigated. Therefore, deterioration of the concave portion is suppressed, and swinging of the side case is smoothly attenuated.

As a result, the mobile object that can suppress an occurrence of the weave mode while increasing luggage capacity is realized.

Other features, elements, characteristics, and advantages of the present disclosure will become more apparent from the following description of preferred embodiments of the present disclosure with reference to the attached drawings.

### BRIEF DESCRIPTION OF THE DRAWING

Fig. 1 is a side view of a motorcycle according to one embodiment of the present teaching;
Fig. 2 is a schematic plan view of the motorcycle showing left and right side cases being attached to a sub-frame;
Fig. 3 is an external perspective view mainly showing the left side case being attached to the sub-frame;
Fig. 4 is an external perspective view mainly showing the right side case being attached to the sub-frame;
Fig. 5 is an external perspective view showing the configuration of a support member for supporting a left rotation support mechanism at a left upper rail;
Fig. 6 is an external perspective view of the left rotation support mechanism attached between two support members of Fig. 5 as viewed from a position obliquely farther leftward and upward than the left rotation support mechanism;
Fig. 7 is an external perspective view of the rotation support mechanism of Fig. 6 as viewed from a position obliquely farther rightward and downward than the rotation support mechanism;
Fig. 8 is a cross sectional view of the upper rail and the rotation support mechanism of Fig. 6 that are cut along a plane including central axes of left and right upper rails;
Fig. 9 is an external perspective view of a left support device and the side case as viewed from a position obliquely farther leftward and upward than the left support device and the side case;
Fig. 10 is an external perspective view of the support device of Fig. 9 as viewed from the transparent rotation cover member;
Fig. 11 is a cross sectional view of the support device of Fig. 9 that is cut along the plane that is in parallel with a left-and-right direction and includes a third axis of Fig. 3;
Fig. 12 is a cross sectional view taken along the line Q-Q of Fig. 11;
Fig. 13 is an external perspective view showing one example of the method of attaching the support device to the support member;
Fig. 14 is a left side view of a rotation cover member of Fig. 9;
Fig. 15 is a right side view of the rotation cover member of Fig. 9;
Fig. 16 is a diagram for explaining the details of the structure of a supported portion of the side case;
Fig. 17 is a diagram for explaining the operations of an insertion portion and an inserted member in a case where the side case swings rightwardly from a reference state;
Fig. 18 is a diagram for explaining the operations of the insertion portion and the inserted member in a case where the side case swings rightwardly from the reference state;
Fig. 19 is a diagram for explaining the operations of the insertion portion and the inserted member in a case where the side case swings rightwardly from the reference state;
Fig. 20 is a diagram for explaining attachment and detachment of the side case with respect to the sub-frame;
Fig. 21 is a diagram for explaining attachment and detachment of the side case with respect to the sub-frame; and
Fig. 22 is a diagram for explaining a fixing function of the side case by the side case device.

### DETAILED DESCRIPTION OF PREFERRED EMBODIMENTS

A side case device, a mobile object including the side case device, a side case and a support device according to one embodiment of the present teaching will be described below with reference to the drawings. In the present embodiment, a motorcycle is described as one example of the mobile object.

### [1] Schematic Configuration of Motorcycle

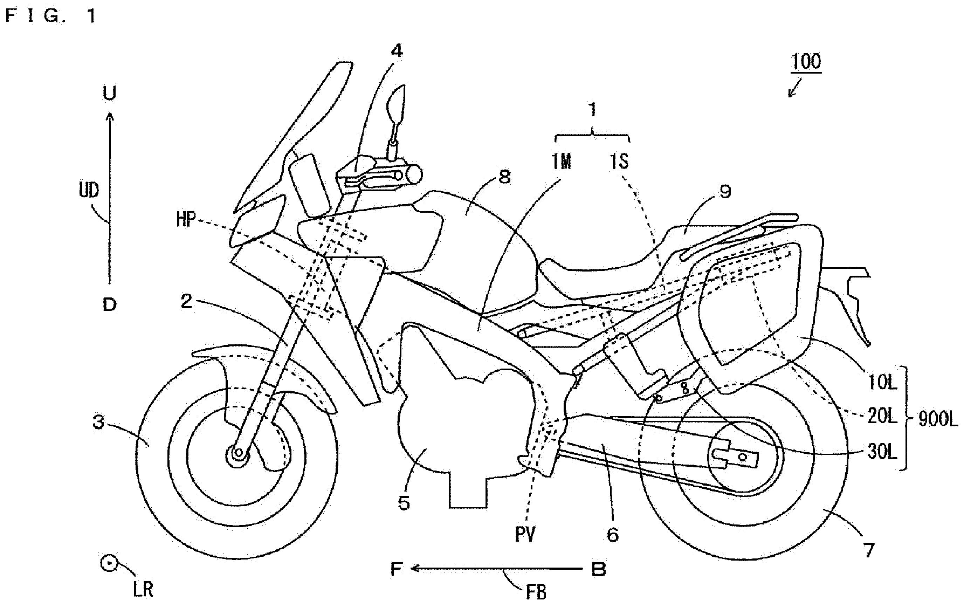

Fig. 1 is a side view of the motorcycle according to the one embodiment of the present teaching. In Fig. 1, the motorcycle 100 standing up to be perpendicular to the road surface is shown. In each of Fig. 1 and subsequent given diagrams, a front-and-rear direction FB, a left-and-right direction LR and an up-and-down direction UD of the motorcycle 100 are suitably indicated by the arrows. The direction in which the arrow is directed in the front-and-rear direction FB is referred to as forward, and its opposite direction is referred to as rearward. Further, the direction in which the arrow is directed in the left-and-right direction LR is referred to as leftward, and its opposite direction is referred to as rightward. Further, the direction in which the arrow is directed in the up-and-down direction UD is referred to as upward, and its opposite direction is referred to as downward. Further, in each of Fig. 1 and subsequent given diagrams, forward, rearward, leftward, rightward, upward and downward of the motorcycle 100 are indicated by reference characters F, B, L, R, U and D, respectively.

As shown in Fig. 1, the motorcycle 100 includes a metallic body frame 1. The body frame 1 extends in the front-and-rear direction FB and includes a main frame 1M and a sub-frame 1S. The front end of the main frame 1M constitutes a head pipe HP. The main frame 1M is formed to extend rearwardly and downwardly from the head pipe HP. The sub-frame 1S is attached to the main frame 1M so as to extend rearwardly and slightly upwardly from the rear end portion of the main frame 1M and its vicinity.

A front fork 2 is provided at the head pipe HP to be swingable in the left-and-right direction LR. A front wheel 3 is rotatably supported at the lower end of the front fork 2. A handle 4 is provided at the upper end of the front fork 2.

The main frame 1M supports an engine 5 at a position farther downward and farther rearward than the head pipe HP. A fuel tank 8 is provided above the engine 5. A seat 9 is provided rearwardly of the fuel tank 8. The fuel tank 8 is supported by the main frame 1M and located above the main frame 1M. The seat 9 is mainly supported by the sub-frame 1S and located above the sub-frame 1S. The seat 9 of the present example is a tandem seat in which two seating portions for two riders are integrally formed. A rider who operates the motorcycle 100 can be seated on the front half of the seat 9. A rider who does not operate the motorcycle 100 can be seated on the rear half of the seat 9.

A rear arm 6 is provided to extend rearwardly from a lower rear end portion of the main frame 1M. The rear arm 6 is supported by the main frame 1M via a pivot shaft PV and a rear suspension (not shown). A rear wheel 7 is rotatably supported at the rear end of the rear arm 6. The rear wheel 7 is rotated as a drive wheel by the motive power generated from the engine 5.

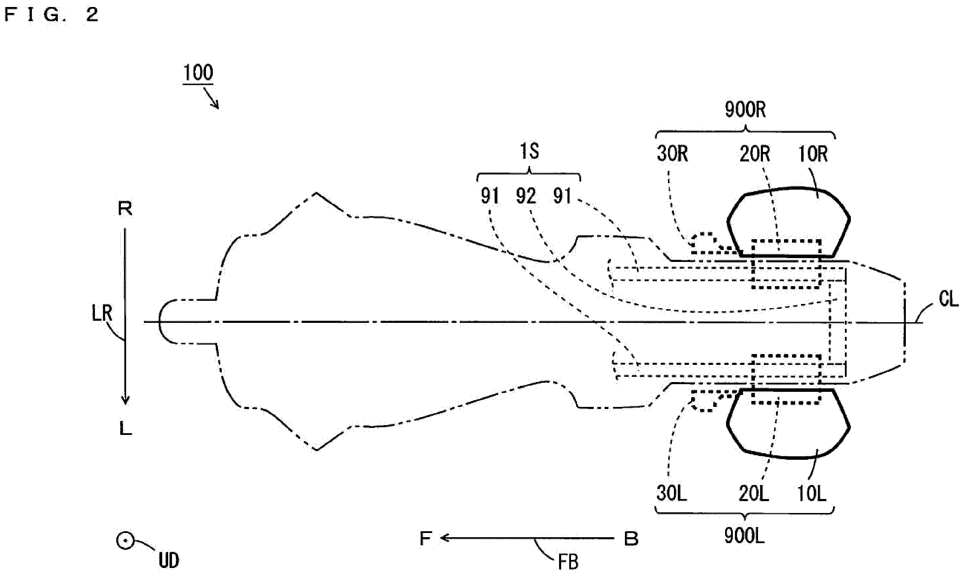

A pair of left and right side case devices 900L, 900R (Fig. 2) are attached to the rear end and both of the left and right side portions of the motorcycle 100. In Fig. 1, only the left side case device 900L is shown. The side case devices 900L is constituted mainly by a side case 10L (Fig. 2), a rotation support mechanism 20L (Fig. 2) and a support device 30L (Fig. 2). The side case device 900R is constituted mainly by a side case 10R (Fig. 2), a rotation support mechanisms 20R (Fig. 2) and a support device 30R (Fig. 2). One portion (an upper portion) of each of the side cases 10L, 10R overlaps with part of the sub-frame 1S in a side view of the vehicle. Further, another portion (a lower portion) of each of the side cases 10L, 10R overlaps with part of the rear wheel 7 in a side view of the vehicle.

The left and right side cases 10L, 10R are attached to the sub-frame 1S with use of the left and right rotation support mechanisms 20L, 20R and the left and right support devices 30L, 30R. Fig. 2 is a schematic plan view of the motorcycle 100 showing the left and right side cases 10L, 10R being attached to the sub-frame 1S. In Fig. 2, the outer shape of the motorcycle 100 except for the left and right side case devices 900L, 900R is indicated by the two-dots and dash line.

As shown in Fig. 2, the sub-frame 1S includes a pair of left and right upper rails 91 and a cross member 92. The left and right upper rails 91 are provided to extend in the front-and-rear direction FB and be arranged in the left-and-right direction LR in a plan view of the vehicle. The cross member 92 couples the rear end portions of the left and right upper rails 91 to each other.

The rotation support mechanisms 20L, 20R of the left and right side case devices 900L, 900R are provided at the sub-frame 1S. Further, the support devices 30L, 30R of the left and right side case devices 900L, 900R are provided at the sub-frame 1S. In Fig. 2, the left and right side cases 10L, 10R are schematically indicated by the thick solid lines. Further, the left and right rotation support mechanisms 20L, 20R and the left and right support devices 30L, 30R are schematically indicated by the thick dotted lines.

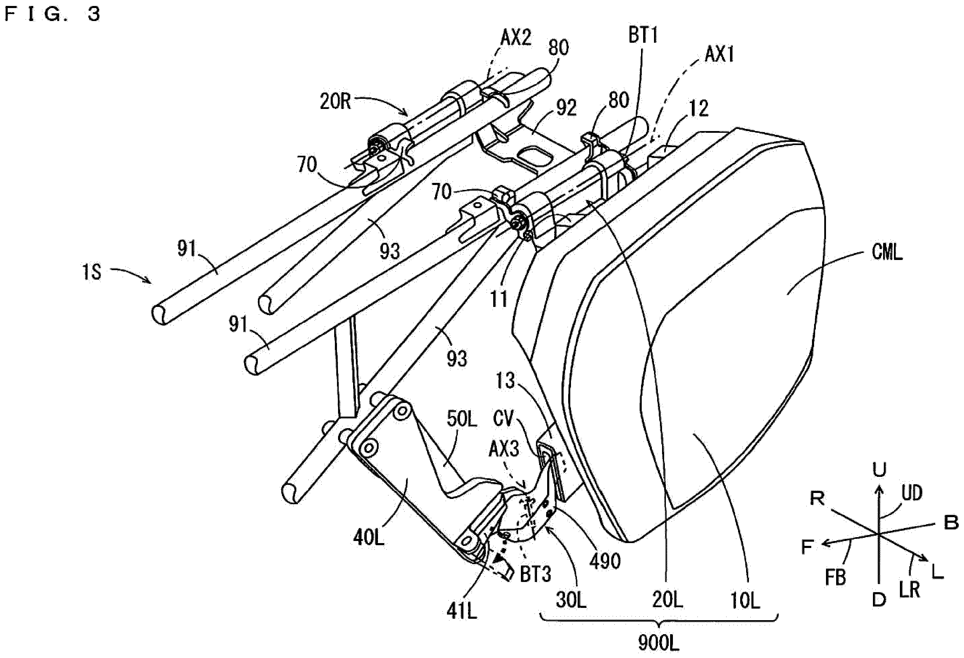

The left side case 10L is attached to the left upper rail 91 by the left rotation support mechanism 20L. The left support device 30L is fixed to a left lower rail 93 (Fig. 3), described below, and supports the lower front end portion of the left side case 10L.

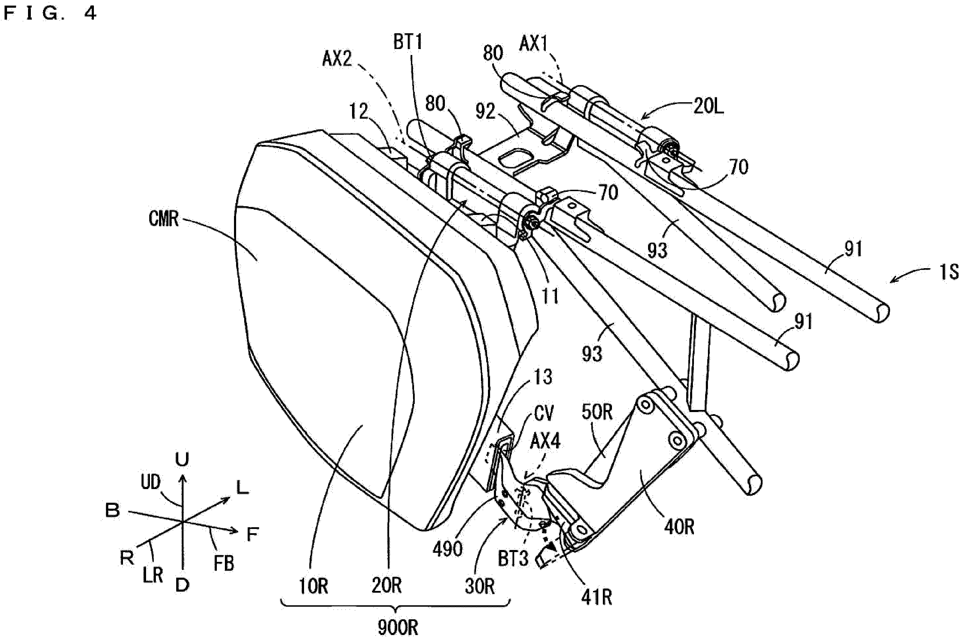

The right side case 10R is attached to the right upper rail 91 by the right rotation support mechanism 20R. The right support device 30R is fixed to a right lower rail 93 (Fig. 4), described below, and supports the lower front end portion of the right side case 10R.

The left and right side case devices 900L, 900R basically have the symmetric structure about a vertical plane including a vehicle central axis CL (hereinafter referred to as a central vertical plane) extending in the front-and-rear direction FB through the center of the motorcycle 100. That is, the left and right side cases 10L, 10R basically have the symmetric structure about the central vertical plane. Further, the left and right rotation support mechanisms 20L, 20R basically have the symmetric structure about the central vertical plane. Further, the left and right support devices 30L, 30R basically have the symmetric structure about the central vertical plane. The left and right rotation support mechanisms 20L, 20R and the left and right support devices 30L, 30R will be described below.

### [2] Overview of Rotation Support Mechanisms 20L, 20R and Support Devices 30L, 30R

Fig. 3 is an external perspective view mainly showing the left side case 10L being attached to the sub-frame 1S. As shown in Fig. 3, the sub-frame 1S includes a pair of left and right lower rails 93 in addition to the left and right upper rails 91 and the cross member 92 of Fig. 2.

The left lower rail 93 is provided to extend forwardly and obliquely downwardly from a lower portion in the vicinity of the rear end portion of the left upper rail 91. The right lower rail 93 is provided to extend forwardly and obliquely downwardly from a lower portion in the vicinity of the rear end portion of the right upper rail 91. The front end portions of the left and right lower rails 93 are connected to the rear end portion of the main frame 1M of Fig. 1.

In an upper portion in the vicinity of the rear end portion of the left upper rail 91, two support members 70, 80 for supporting the rotation support mechanism 20L are provided to be arranged in the front-and-rear direction FB and spaced apart from each other. Each of the support members 70, 80 is fabricated by bending of a sheet of metal that is cut into a predetermined shape, for example, and connected to the upper rail 91 by welding. The left rotation support mechanism 20L is provided between the two support members 70, 80.

The left side case 10L has a configuration in which two attachment portions 11, 12 and a supported portion 13 are formed at a case main body CML. In a portion in the vicinity of the upper end of the right side portion of the case main body CML, the two attachment portions 11, 12 are formed to be arranged in the front-and-rear direction FB and be spaced apart from each other. The left rotation support mechanism 20L is configured such that the two attachment portions 11, 12 of the left side case 10L are attachable to and detachable from the left rotation support mechanism 20L. With the two attachment portions 11, 12 of the side case 10L attached to the left rotation support mechanism 20L, the left rotation support mechanism 20L supports the left side case 10L to be rotatable about a first axis AX1 extending in parallel with a central axis of the left upper rail 91.

Two support members 40L, 50L are attached to part of the left lower rail 93 to extend rearwardly and obliquely downwardly. The support member 40L is located at a position farther outward (leftward in the present example) than the support member 50L, and large portions of the support members 40L, 50L overlap with each other in the left-and-right direction LR. The two support members 40L, 50L may be provided to be in contact with each other or may be provided to be spaced apart from each other. Alternatively, the support members 40L, 50L may be integrally formed of a single member.

A footrest 41L is provided at the lower end portion of the support member 40L to be foldable. As indicated by the thick dotted arrow in Fig. 3, the folded footrest 41L is to be unfolded. Thus, the rider who does not operate the motorcycle 100 can place his or her left foot on the unfolded footrest 41L while being seated on the rear half of the seat 9.

The lower end portion of the support member 50L is located forwardly of the lower end portion of the side case 10L attached to the rotation support mechanism 20L. The support device 30L is attached to the lower end portion of the support member 50L. The support device 30L includes a rotation cover member 490. The rotation cover member 490 of the support device 30L is provided to be rotatable about a third axis AX3 that intersects with the direction of the above-mentioned first axis AX1. In the present embodiment, the third axis AX3 extends in the up-and-down direction UD. Further, the rotation cover member 490 extends at least in the front-and-rear direction FB in a side view and a plan view of the vehicle. In Fig. 3, a bolt BT3 provided to extend along the third axis AX3 is indicated by the dotted lines. This bolt BT3 is an example of a shaft member of the present teaching. The bolt BT3 will be described below.

A supported portion 13 is formed at a lower front end portion of the side case 10L. The supported portion 13 has a concave portion CV that opens forwardly and downwardly. The concave portion CV of the side case 10L is formed such that the rear end portion of the rotation cover member 490 of the support device 30L is insertable into the concave portion CV from the front. The concave portion CV does not have to open downwardly.

In a case where the side case 10L rotates (swings) about the first axis AX1 with the rear end portion of the rotation cover member 490 inserted into the supported portion 13 of the side case 10L, the support device 30L attenuates the rotation of the side case 10L.

As described above, the left and right side cases 10L, 10R, the left and right rotation support mechanisms 20L, 20R and the left and right support devices 30L, 30R respectively and basically have the symmetric structures about central vertical plane. Therefore, an attachment state of the right side case 10R being attached to the sub-frame 1S is equal to an attachment state of the left side case 10L being attached to the sub-frame 1S of Fig. 3 and being inverted with respect to the central vertical plane.

Fig. 4 is an external perspective view mainly showing the right side case 10R being attached to the sub-frame 1S. Similarly to the example of the left upper rail 91, in an upper portion in the vicinity of the rear end portion of the right upper rail 91, two support members 70, 80 for supporting the right rotation support mechanism 20R are provided to be arranged in the front-and-rear direction FB and spaced apart from each other. The right rotation support mechanism 20R is provided between the two support members 70, 80.

The right side case 10R has the configuration in which two attachment portions 11, 12 and a supported portion 13 are formed in a case main body CMR. In a portion in the vicinity of the upper end of the left side portion of the case main body CMR, the two attachment portions 11, 12 are formed to be arranged in the front-and-rear direction FB and spaced apart from each other. The right rotation support mechanism 20R is configured such that the two attachment portions 11, 12 of the right side case 10R are attachable to and detachable from the right rotation support mechanism 20R. With the two attachment portions 11, 12 of the side case 10R attached to the right rotation support mechanism 20R, the right rotation support mechanism 20R supports the right side case 10R to be rotatable about a second axis AX2 extending in parallel with the central axis of the right upper rail 91.

Two support members 40R, 50R are attached to part of the right lower rail 93 to extend rearwardly and obliquely downwardly. The two support members 40R, 50R correspond to the two support members 40L, 50L of Fig. 3.

A footrest 41R is provided at the lower end portion of the support member 40R to be foldable. The folded footrest 41R is to be unfolded as indicated by the thick dotted arrow in Fig. 4. Thus, a rider who does not operate the motorcycle 100 can place his or her right foot on the unfolded footrest 41R while being seated on the rear half of the seat 9.

The lower end portion of the support member 50R is located forwardly of the lower end portion of the side case 10R attached to the rotation support mechanism 20R. The support device 30R is attached to the lower end portion of the support member 50R. The support device 30R includes a rotation cover member 490. The rotation cover member 490 of the support device 30R is provided to be rotatable about a fourth axis AX4 that intersects with the direction of the above-mentioned second axis AX2. In the present embodiment, the fourth axis AX4 extends in the up-and-down direction UD. In Fig. 4, similarly to the example of Fig. 3, a bolt BT3 provided to extend along the fourth axis AX4 is indicated by the dotted lines. The bolt BT3 is an example of a shaft member of the present teaching. The bolt BT3 will be described below.

Similarly to the side case 10L, a supported portion 13 having a concave portion CV is formed at a lower front end portion of the side case 10R. The concave portion CV of the side case 10R is formed such that the rear end portion of the rotation cover member 490 of the support device 30R is insertable into the concave portion CV of the side case 10R from the front. In a case where the side case 10R rotates (swings) about the second axis AX2 with the rear end portion of the rotation cover member 490 inserted into the supported portion 13 of the side case 10R, the support device 30R attenuates the rotation of the side case 10R.

### [3] Details of Rotation Support Mechanisms 20L, 20R and Their Peripheral Members

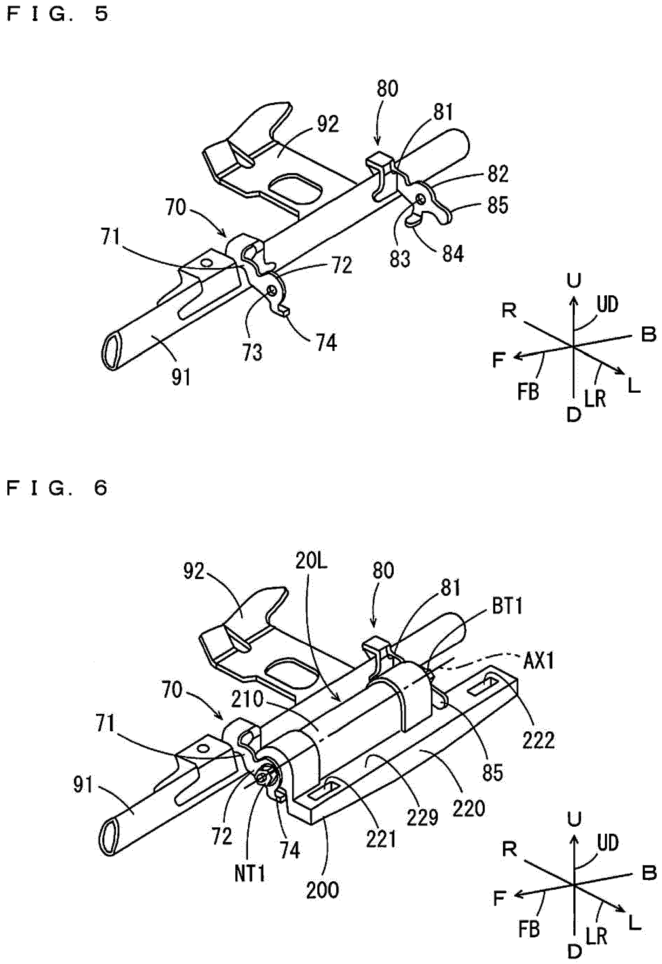

Details of the structure of the left rotation support mechanism 20L and its peripheral members out of the rotation support mechanisms 20L, 20R will be representatively described. Fig. 5 is an external perspective view showing the configuration of the support members 70, 80 for supporting the left rotation support mechanism 20L at the left upper rail 91.

As shown in Fig. 5, the one support member 70 is provided forwardly of the other support member 80 and includes a connecting portion 71, a shaft support portion 72 and a rotation restricting portion 74. The connecting portion 71 is connected to the upper rail 91 by welding. The shaft support portion 72 projects leftwardly of the upper rail 91 by a certain distance with the connecting portion 71 connected to the upper rail 91. A through hole 73 penetrating in the front-and-rear direction FB is formed at the center of the shaft support portion 72. The rotation restricting portion 74 is formed in a lower end portion of the shaft support portion 72. The rotation restricting portion 74 extends downwardly from the lower end portion of the shaft support portion 72 and is further bent rearwardly.

The other support member 80 includes a connecting portion 81, a shaft support portion 82 and rotation restricting portions 84, 85. The connecting portion 81 is connected to the upper rail 91 by welding. The shaft support portion 82 projects leftwardly of the upper rail 91 by a certain distance with the connecting portion 81 connected to the upper rail 91. A through hole 83 penetrating in the front-and-rear direction FB is formed at the center of the shaft support portion 82. The rotation restricting portion 84 is formed in a lower end portion of the shaft support portion 82. The rotation restricting portion 84 extends downwardly from the lower end portion of the shaft support portion 82 and is further bent forwardly. Further, the rotation restricting portion 85 is formed in a left end portion of the shaft support portion 82. The rotation restricting portion 85 further extends leftwardly from the left end portion of the shaft support portion 82 by a certain distance. The straight line that connects the center of the through hole 73 formed in the support member 70 to the center of the through hole 83 formed in the support member 80 coincides with the first axis AX1 of Fig. 3.

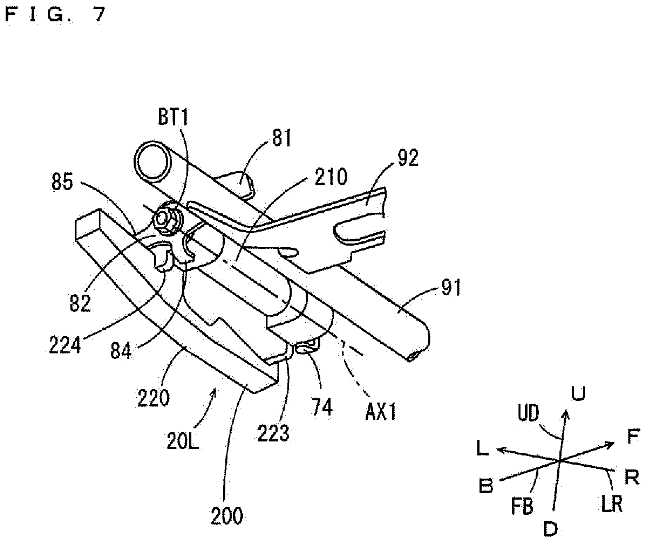

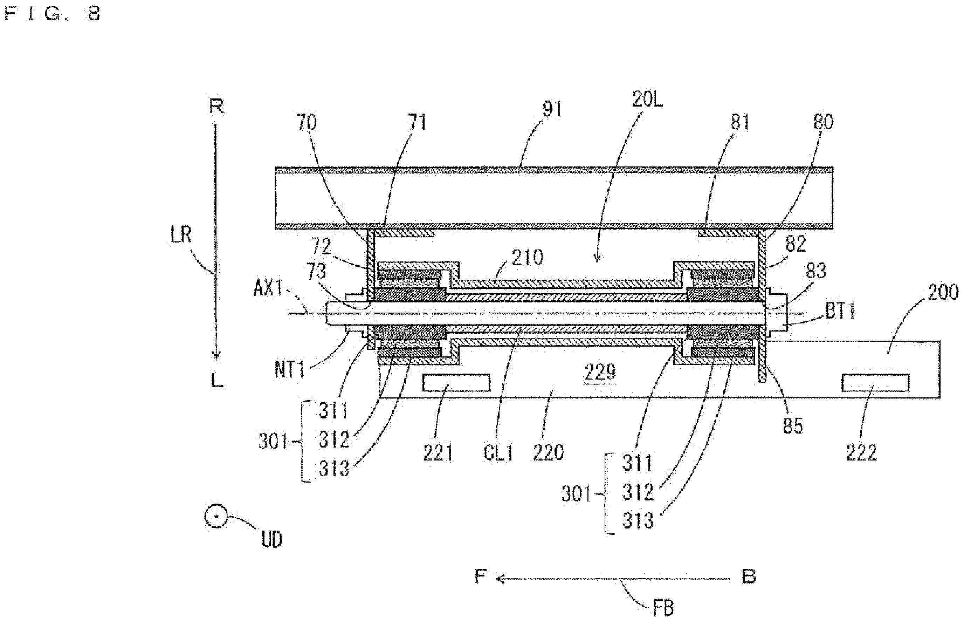

Fig. 6 is an external perspective view of the left rotation support mechanism 20L attached between the two support members 70, 80 of Fig. 5 as viewed from a position obliquely farther leftward and upward than the left rotation support mechanism 20L, and Fig. 7 is an external perspective view of the rotation support mechanism 20L of Fig. 6 as viewed from a position obliquely farther rightward and downward than the rotation support mechanism 20L. Fig. 8 is a cross sectional view of the upper rail 91 and the rotation support mechanism 20L of Fig. 6 that is cut along the plane including the central axes of the left and right upper rails 91.

As shown in Figs. 6 and 7, the rotation support mechanism 20L has a rotation member 200, a bolt BT1 and a nut NT1. The rotation member 200 includes a cylinder portion 210 and a support portion 220. The cylinder portion 210 has a tubular shape extending in one direction by a predetermined length and is arranged between the two support members 70, 80. The support portion 220 has a substantially prismatic shape, is integrally provided at one portion in a peripheral direction of the outer periphery of the cylinder portion 210 and is formed to further extend rearwardly by a certain distance beyond the rear end of the cylinder portion 210 from the front end of the cylinder portion 210.

Further, the support portion 220 has an upper surface 229 directed upwardly with the cylinder portion 210 arranged between the support members 70, 80. An attachment hole 221 is formed in the upper surface 229 in the vicinity of the front end portion of the support portion 220. Further, an attachment hole 222 is formed in the upper surface 229 in the vicinity of the rear end portion of the support portion 220. The attachment holes 221, 222 of Fig. 6 are formed such that the two attachment portions 11, 12 (Fig. 3) of the side case 10L are attachable to and detachable from the attachment holes 221, 222.

As shown in Fig. 8, two inner outer cylindrical dampers 301 are provided inside of the cylinder portion 210 at the both end portions of the cylinder portion 210. Further, a collar member CL1 is provided between the two inner outer cylindrical dampers 301 in the inner space of the cylinder portion 210. Each inner outer cylindrical damper 301 includes an inner cylinder 311, a rubber bush 312 and an outer cylinder 313. The rubber bush 312 is provided to surround the outer peripheral surface of the inner cylinder 311, and the outer cylinder 313 is provided to surround the outer peripheral surface of the rubber bush 312. The inner cylinder 311 and the outer cylinder 313 are formed of metal, for example. The rubber bush 312 is baked on each of the outer peripheral surface of the inner cylinder 311 and the inner peripheral surface of the outer cylinder 313. Thus, the outer peripheral surface of the inner cylinder 311 and the inner peripheral surface of the outer cylinder 313 are bonded to each other via the rubber bush 312. The outer peripheral surface of the outer cylinder 313 is fixed to the inner peripheral surface of the cylinder portion 210 by crimping or welding or the like.

When the rotation support mechanism 20L is attached to the left upper rail 91, the cylinder portion 210 is arranged between the shaft support portion 72 of the support member 70 and the shaft support portion 82 of the support member 80. Further, the bolt BT1 is inserted into the cylinder portion 210 and the through hole 73 of the support member 70 through the through hole 83 from a position farther rearward than the support member 80. The bolt BT1 has a length that is larger than the distance between the support members 70, 80. Thus, in the inner space of the cylinder portion 210, the bolt BT1 is located inside of the two inner cylinders 311 and the collar member CL1. In this state, the nut NT1 is attached to the tip of the bolt BT1 projecting forwardly of the support member 70. Thus, various members located between a head portion of the bolt BT1 and the nut NT1 are compressed, and the bolt BT1, the support members 70, 80, the collar member CL1 and the two inner cylinders 311 are integrally fixed. On the other hand, each outer cylinder 313 fixed to the cylinder portion 210 is supported to be rotatable with respect to the inner cylinder 311 while sandwiching the rubber bushe 312 between the inner cylinder 311 and the outer cylinder 313. At this time, the central axis of the bolt BT1 coincides with the first axis AX1.

With such a configuration, when the side case 10L attached to the rotation support mechanism 20L rotates (swings), the rotation member 200 of the rotation support mechanism 20L rotates about the first axis AX1. In this case, between the bolt BT1 and the rotation member 200, a relative rotational force is generated around the first axis AX1. Part of this rotational force is absorbed by the rubber bushes 312 of the two inner outer cylindrical dampers 301. Thus, the rotation (swinging) of the left side case 10L is attenuated.

As shown in Fig. 6, the rotation restricting portion 85 of the support member 80 is located upwardly and in the vicinity of the support portion 220 with the rotation support mechanism 20L attached to the left upper rail 91. Thus, when the support portion 220 rotates upwardly about the first axis AX1, the upper surface 229 of the support portion 220 abuts against the rotation restricting portion 85. Thus, excessive rotation of the support portion 220 is restricted.

Further, as shown in Fig. 7, two projections 223, 224 are formed in portions, located in the vicinity of the cylinder portion 210, of the support portion 220. The two projections 223, 224 are formed to respectively abut against the rotation restricting portion 74 of the support member 70 and the rotation restricting portion 84 of the support member 80 when the support portion 220 rotates downwardly about the first axis AX1 by a certain angle or more. Thus, when the support portion 220 rotates downwardly about the first axis AX1, the two projections 223, 224 abut against the rotation restricting portions 74, 84. Thus, excessive rotation of the support portion 220 is restricted. Thus, the side case 10L is prevented from swinging largely.

As described above, the attachment state of the right side case 10R being attached to the sub-frame 1S is equal to the attachment state of the left side case 10L being attached to the sub-frame 1S of Fig. 3 and being inverted with respect to the central vertical plane. Therefore, in a case where the right side case 10R is attached to the right rotation support mechanism 20R, the rotation of the side case 10R about the second axis AX2 is allowed similarly to the example of the left side case 10L. Further, the rotation (swinging) of the side case 10R is attenuated by the rotation support mechanism 20R.

### [4] Details of Support Devices 30L, 30R and Their Peripheral Members

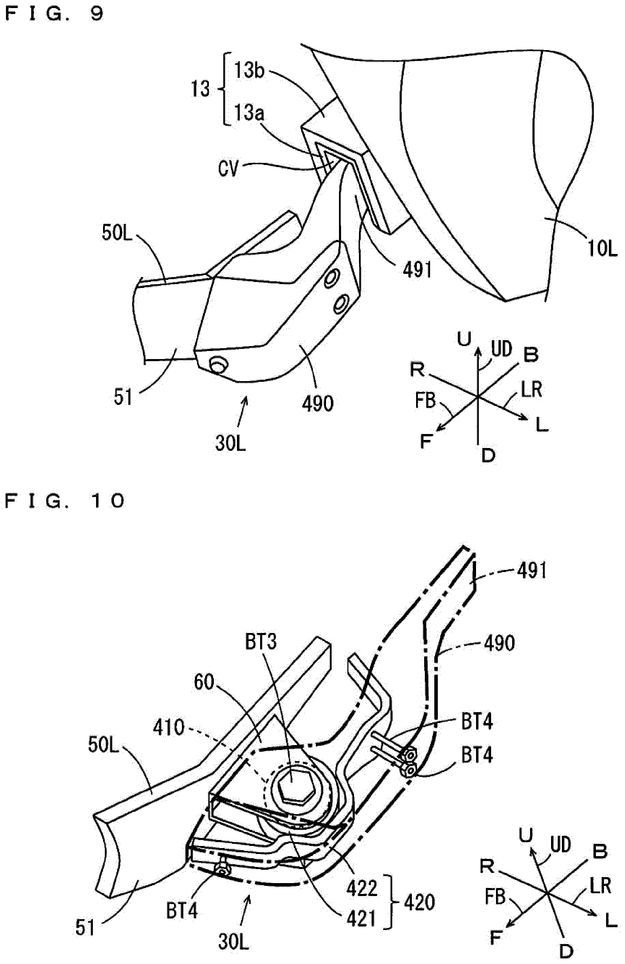

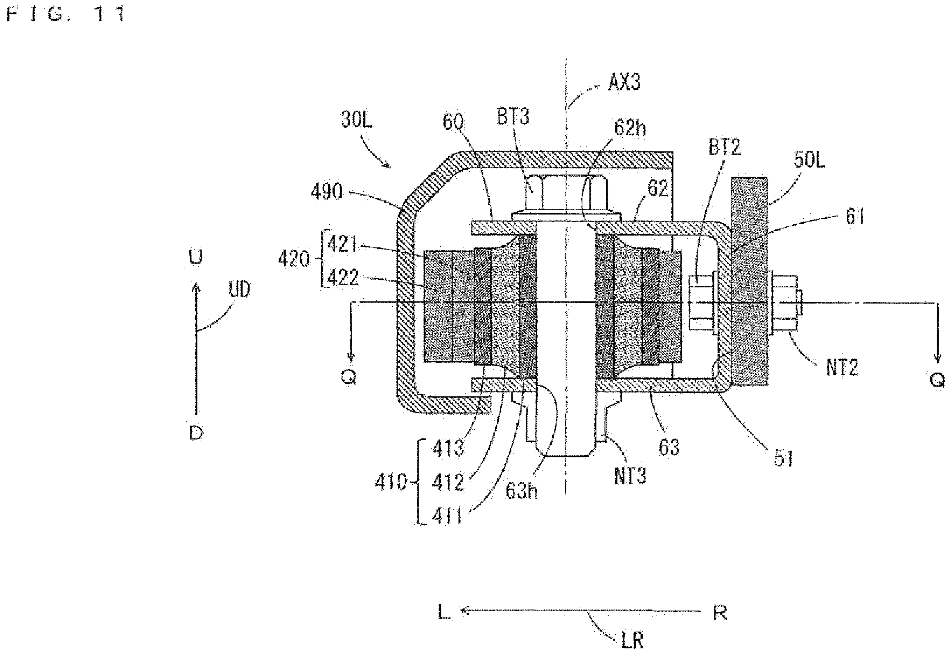

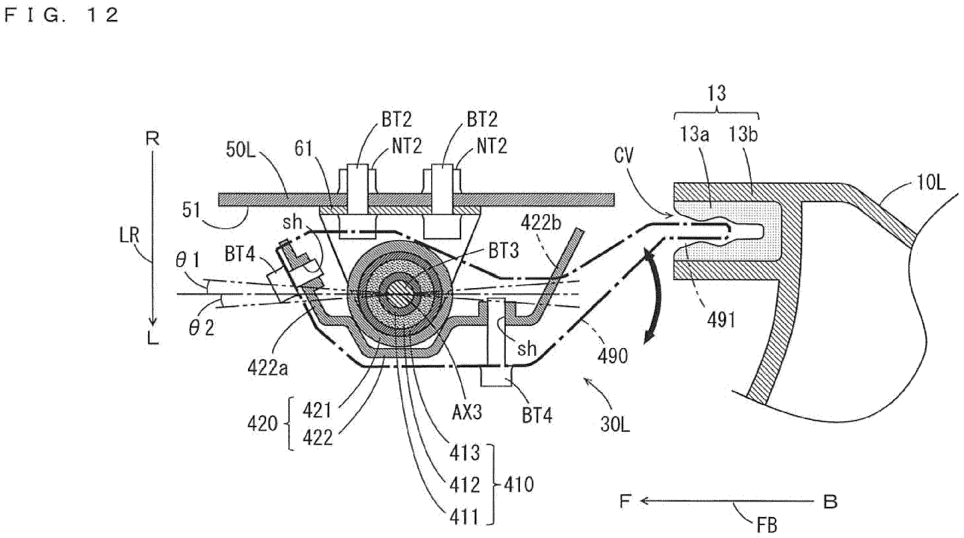

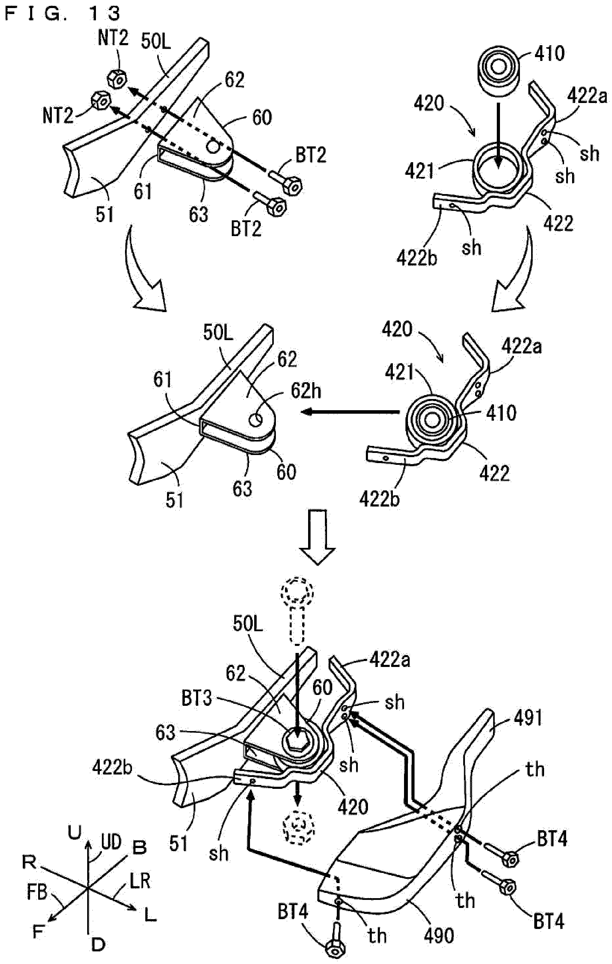

Details of the structure of the left support device 30L and its peripheral members out of the support devices 30L, 30R will be representatively described together with the attachment method with respect to the support member 50L. Fig. 9 is an external perspective view of the left support device 30L and the side case 10L as viewed from a position obliquely farther leftward and upward than the left support device 30L and the side case 10L, and Fig. 10 is an external perspective view of the support device 30L of Fig. 9 as viewed through the transparent rotation cover member 490. Fig. 11 is a cross sectional view of the support device 30L of Fig. 9 that is cut along the plane in parallel with the left-and-right direction LR and including the third axis AX3 of Fig. 3, and Fig. 12 is a cross sectional view taken along the line Q-Q of Fig. 11. Fig. 13 is an external perspective view showing one example of the method of attaching the support device 30L to the support member 50L.

In Figs. 9 and 12, part of the side case 10L is shown together with the support device 30L. In Fig. 10, the outer shape of the rotation cover member 490 is indicated by the thick one-dot and dash line. In Fig. 12, the outer shape of the rotation cover member 490 is indicated by the thick one-dot and dash line instead of the cross section of the rotation cover member 490 of Fig. 3. The scale of Fig. 11 is different from the scale of Fig. 12.

The support member 50L attached to the left lower rail 93 of Fig. 3 is formed of a metallic plate member. As shown in Fig. 9, a lower portion of the support member 50L is positioned to be orthogonal to the left-and-right direction LR. The support device 30L is attached to a surface 51 that is directed leftwardly in the lower end portion of the support member 50L and its peripheral portion.

As shown in Figs. 10 to 12, the support device 30L is constituted mainly by a fixing member 60, an inner outer cylindrical damper 410, a coupling member 420, a rotation cover member 490, bolts BT2, BT3, BT4 and nuts NT2, NT3.

The fixing member 60 is fabricated by bending of a sheet of metal that is cut into a predetermined shape, for example, and has a sidewall portion 61, an upper wall portion 62 and a lower wall portion 63 as shown in Fig. 11. The upper wall portion 62 and the lower wall portion 63 are bent in the same direction from the sidewall portion 61, thereby being opposite to each other with the distance corresponding to the sidewall portion 61 present therebetween.

As shown in the upper left field of Fig. 13, the sidewall portion 61 of the fixing member 60 is attached to the support member 50L with two bolts BT2 and two nuts NT2. Thus, as shown in Fig. 11, the sidewall portion 61 is fixed while being in contact with the surface 51 of the support member 50L. Further, the upper wall portion 62 and the lower wall portion 63 extend horizontally and leftwardly from the upper end portion and the lower end portion of the sidewall portion 61 and are opposite to each other in the up-and-down direction UD. In substantially the center of the upper wall portion 62 and the lower wall portion 63, through holes 62h, 63h are respectively formed.

As shown in the upper right field of Fig. 13, the coupling member 420 includes a cylindrical member 421 and a strip-shaped member 422. The inner outer cylindrical damper 410 is fitted to the inside of the cylindrical member 421. In this state, the outer peripheral surface of the inner outer cylindrical damper 410 (an outer peripheral surface of an outer cylinder 413, described below) is fixed to the inner peripheral surface of the cylindrical member 421 by crimping, welding or the like.

The strip-shaped member 422 is fabricated by bending and processing of a strip-shaped metallic plate and is connected to part of the outer peripheral surface of the cylindrical member 421 by welding, for example. Further, in a case where the coupling member 420 is viewed in the direction of the central axis of the cylindrical member 421, the strip-shaped member 422 has a first portion 422a and a second portion 422b that respectively extend in one direction and the direction opposite to the one direction from the outer peripheral surface of the cylindrical member 421. Each of the first portion 422a and the second portion 422b is bent such that its tip portion is located closer to the cylindrical member 421. Two screw holes sh are formed in the first portion 422a. One screw hole sh is formed in the second portion 422b.

As shown in the middle field of Fig. 13, the inner outer cylindrical damper 410 fitted to the cylindrical member 421 is inserted into the space between the upper wall portion 62 and the lower wall portion 63 of the fixing member 60 fixed to the support member 50L. At this time, the inner outer cylindrical damper 410 is positioned such that the central axis of the inner outer cylindrical damper 410 is located on the straight line passing through the through holes 62h, 63h of the fixing member 60 and extending in the up-and-down direction UD.

The inner outer cylindrical damper 410 basically has the same configuration as that of the inner outer cylindrical damper 301 and includes an inner cylinder 411, a rubber bush 412 and an outer cylinder 413 as shown in Fig. 11. The rubber bush 412 is provided to surround the outer peripheral surface of the inner cylinder 411, and the outer cylinder 413 is provided to surround the outer peripheral surface of the rubber bush 412. The inner cylinder 411 and the outer cylinder 413 are formed of metal, for example. The rubber bush 412 is baked on each of the outer peripheral surface of the inner cylinder 411 and the inner peripheral surface of the outer cylinder 413. Thus, the outer peripheral surface of the inner cylinder 411 and the inner peripheral surface of the outer cylinder 413 are bonded to each other via the rubber bush 412.

As shown in the lower field of Fig. 13, the bolt BT3 is inserted to pass through the through hole 62h (Fig. 11) of the upper wall portion 62, the through hole of the inner outer cylindrical damper 410 and the through hole 63h (Fig. 11) of the lower wall portion 63. Further, the nut NT3 (Fig. 11) is attached to the tip of the bolt BT3. Thus, various members located between a head portion of the bolt BT3 and the nut NT3 is compressed, and the bolt BT3, the upper wall portion 62, the lower wall portion 63 and the inner cylinder 411 are integrally fixed as shown in Fig. 11. Meanwhile, the outer cylinder 413 is supported to be rotatable together with the coupling member 420 and with respect to the inner cylinder 411 with the rubber bush 412 held therebetween. At this time, the central axis of the bolt BT3 coincides with the third axis AX3.

As shown in the lower field of Fig. 13, a plurality (three in the present example) of through holes th respectively corresponding to a plurality (three in the present example) of screw holes sh of the coupling member 420 are formed in the rotation cover member 490. The plurality (three in the present example) of bolts BT4 are attached to the plurality of screw holes sh of the coupling member 420 through the plurality of through holes th of the rotation cover member 490. Thus, the inner outer cylindrical damper 410 and the rotation cover member 490 are coupled to each other by the coupling member 420.

The rotation cover member 490 is formed of metal such as aluminum. Further, as shown in Figs. 10 and 11, the rotation cover member 490 covers the fixing member 60 and the coupling member 420 from above and left while being attached to the coupling member 420. Further, as shown in Figs. 10 and 12, the rotation cover member 490 extends to a position farther rearward than the rear end portions of the coupling member 420 and the support member 50L.

As shown in Figs. 9 and 12, the rear end portion of the rotation cover member 490 and its vicinity are inserted into the concave portion CV of the supported portion 13 of the side case 10L as an insertion portion 491. In this state, a clearance is formed between the insertion portion 491 of the rotation cover member 490 and the concave portion CV of the side case 10L. Further, the insertion portion 491 of the present example can move freely in a certain range in the left-and-right direction LR and the front-and-rear direction FB while being inserted into the concave portion CV. Thus, when the side case device 900L rotates (swings), the insertion portion 491 of the rotation cover member 490 swings in the left-and-right direction LR in the concave portion CV of the side case 10L. In this case, between the bolt BT3 and the rotation cover member 490, a relative rotational force is generated around the third axis AX3 as indicated by the thick arrow in Fig. 12. Part of this rotational force is absorbed by the rubber bush 412 of the inner outer cylindrical damper 410. Thus, the rotation (swinging) of the left side case 10L is attenuated. Further, the supported portion 13 is constituted by an inserted member 31a and a member holder 13b. Details of structure of the supported portion 13 will be described below.

Here, the state where luggage is not stored in the side case 10L attached to the motorcycle 100 is referred to as a reference state of the side case 10L. As shown in Fig. 12, in the support device 30L of the present example, the rotation cover member 490 is inserted into the concave portion CV of the side case 10L such that the insertion portion 491 is located at the farthest rearward position when the side case 10L is in the reference state. Further, each of the first portion 422a and the second portion 422b of the coupling member 420 is spaced apart from an attachment surface 51 of the support member 50L by a predetermined distance when the side case 10L is in the reference state.

When the side case 10L swings leftwardly from the above-mentioned reference state, the coupling member 420 rotates together with the rotation cover member 490 in one direction by a predetermined angle θ1. Thus, the first portion 422a of the coupling member 420 abuts against the attachment surface 51 of the support member 50L. On the other hand, when the side case 10L swings rightwardly from the reference state, the coupling member 420 rotates together with the rotation cover member 490 in the direction opposite to the above-mentioned one direction by a predetermined angle θ2. Thus, the second portion 422b of the coupling member 420 abuts against the attachment surface 51 of the support member 50L. In this manner, in the support device 30L, the rotation of the rotation cover member 490 with respect to the bolt BT3 in the one direction is restricted to the predetermined angular range θ1 from the reference state. Further, the rotation of the rotation cover member 490 with respect to the bolt BT3 in the opposite direction is restricted to the predetermined angular range θ2. Therefore, an excessive rotational force is prevented from being exerted on the rubber bush 412 of the inner outer cylindrical damper 410, and deterioration of the inner outer cylindrical damper 410 can be suppressed.

The angular ranges θ1, θ2 are defined based on a positional relationship between the support member 50L, and the first portion 422a and the second portion 422b of the coupling member 420 when the side case 10L is in the reference state. Each of the angular ranges θ1, θ2 is preferably defined to be not more than 15°, for example, and is more preferably defined to be not more than 10°.

Further, with the above-mentioned configuration, when a large force directed rightward is generated in a lower portion of the side case 10L due to storage of luggage having an excessive weight, the rotation cover member 490 rotates, and the second portion 422b of the coupling member 420 comes into contact with the support member 50L. In this case, since the support member 50L and the coupling member 420 are both formed of metal, a metallic sound is generated when the support member 50L comes into contact with the coupling member 420. Thus, a rider can easily identify by hearing a metallic sound that luggage having an excessive weight is stored in the side case 10L.

Further, with the above-mentioned configuration, because a lower portion of the side case 10L is prevented from swinging largely and rightwardly from the reference state, the side case 10L and the rear wheel 7 are prevented from coming into contact with each other. Further, because the lower portion of the side case 10L is prevented from swinging largely and leftwardly from the reference state, the support device 30L is prevented from being damaged even in a case where the side case 10L is pulled leftwardly by vandalism and so on.

The attachment state of the right side case 10R being attached to the sub-frame 1S is equal to the attachment state of the left side case 10L being attached to the sub-frame 1S of Fig. 3 and being inverted with respect to the central vertical plane. Therefore, similarly to the example of the left side case 10L, in a case where the right side case 10R is attached to the sub-frame 1S, the rotation of the side case 10R about the second axis AX2 is allowed, and the rotation (swinging) is attenuated by the rotation support mechanism 20R and the support device 30R.

Further, also in the support device 30R, because excessive rotation of the rotation cover member 490 about the fourth axis AX4 is suppressed by the coupling member 420, deterioration of the inner outer cylindrical damper 410 can be suppressed. Further, a rider can easily identify by hearing a metallic sound generated when the support member 50R and the coupling member 420 come into contact with each other that luggage having an excessive weight is stored in the side case 10L. Further, even in a case where the side case 10R is pulled rightwardly by vandalism and so on, the support device 30R is prevented from being damaged.

### [5] Details of Rotation Cover Member 490 of Support Devices 30L, 30R and Supported Portions 13 of Side Cases 10L, 10R

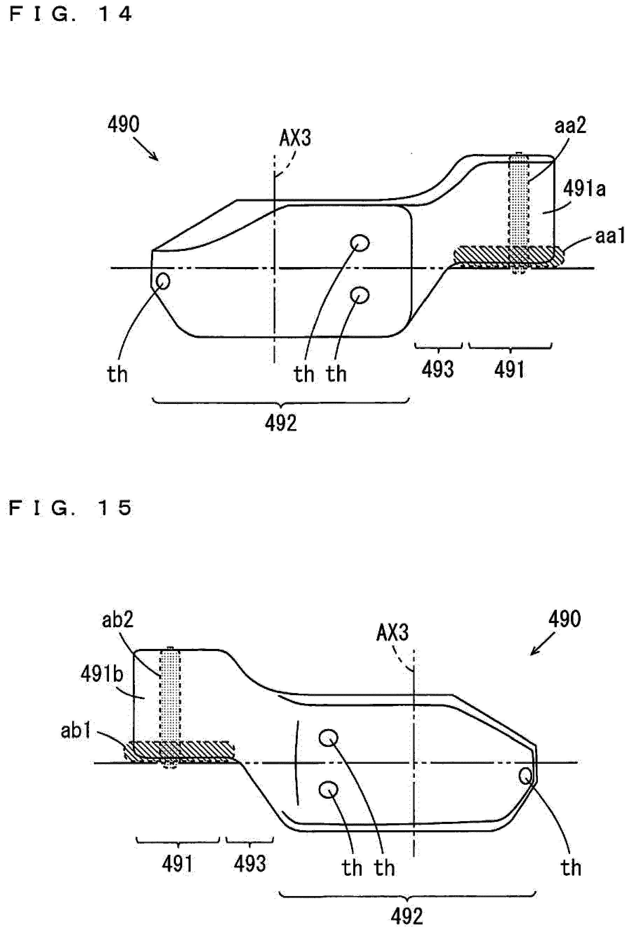

Details of the structure of the rotation cover member 490 of the left support device 30L out of the support devices 30L, 30R will be representatively described. Fig. 14 is a left side view of the rotation cover member 490 of Fig. 9, and Fig. 15 is a right side view of the rotation cover member 490 of Fig. 9.

As shown in Figs. 14 and 15, the rotation cover member 490 is constituted by the insertion portion 491, a cover main body 492 and a bend portion 493. The cover main body 492 is a portion attached to the coupling member 420 to cover the fixing member 60 and the coupling member 420 of Fig. 10 and has a plurality (three in the present example) of through holes th.

In the left and right side views, the cover main body 492 is formed to extend in the direction orthogonal to the third axis AX3 (the front-and-rear direction FB) by a certain distance. The bend portion 493 and the insertion portion 491 are formed at the one end (rear end) of the cover main body 492 to be arranged in this order in a longitudinal direction of the cover main body 492.

The insertion portion 491 is formed to have a substantially rectangular plate shape having a substantially constant thickness and has one surface 491a directed leftwardly and another surface 491b directed rightwardly. The bend portion 493 is bent in the direction of the third axis AX3 between the cover main body 492 and the insertion portion 491. Thus, as indicated by the two-dots and dash lines in Figs. 14 and 15, in the left and right side views of the rotation cover member 490, the position of the center portion of the cover main body 492 and the position of the lower end portion of the insertion portion 491 substantially coincide with each other in the direction of the third axis AX3.

As described below, when the side case 10L attached to the motorcycle 100 swings, the lower end portion of the insertion portion 491 is substantially continuously to be in contact with the inner surface of the concave portion CV of the side case 10L. Thus, a force caused by swinging of the side case 10L is concentrated and exerted on the lower end portion of the insertion portion 491. Even in such a case, with the above-mentioned configuration, because the position of the center portion of the cover main body 492 and the position of the lower end portion of the insertion portion 491 substantially coincide with each other in the direction of the third axis AX3, a force exerted on the lower end portion of the insertion portion 491 is prevented from being concentrated at the lower end portion of the cover main body 492. Thus, deformation of the cover main body 492 due to local concentration of a stress at the lower end portion of the cover main body 492 is prevented.

In the following description, as indicated by hatching in Figs. 14 and 15, an area including the lower end of the one surface 491a of the insertion portion 491 and its vicinity is referred to as a lower end area aa1, and a region including the lower end of the other surface 491b of the insertion portion 491 and its vicinity is referred to as a lower end area ab1. Further, as indicated by a dotted pattern in Figs. 14 and 15, a linear area that passes through the center portion of the one surface 491a of the insertion portion 491 and extends upwardly and downwardly is referred to as a linear area aa2, and a linear area that passes through the center portion of the other surface 491b of the insertion portion 491 and extends upwardly and downwardly is referred to as a linear area ab2.

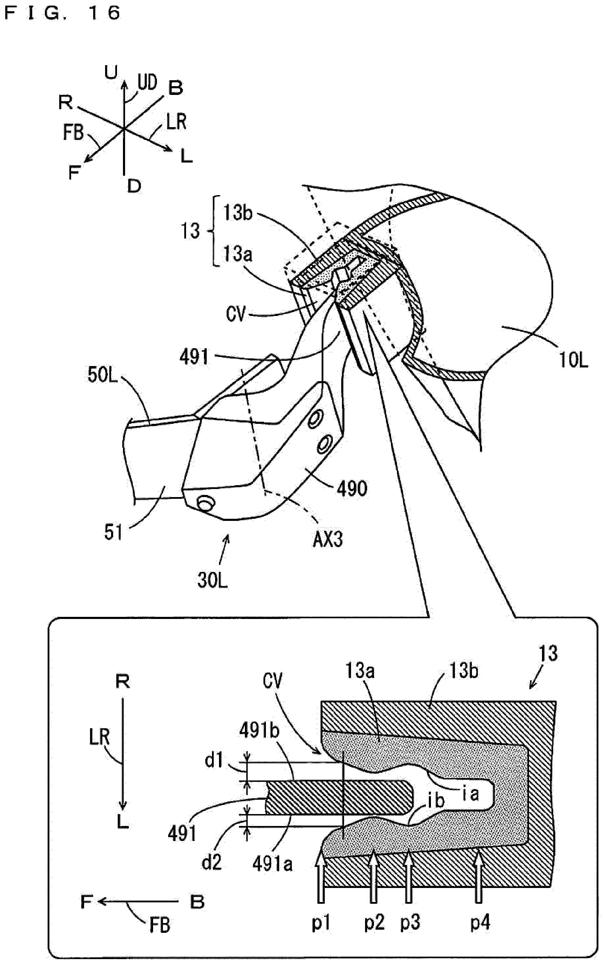

Next, details of structure of the supported portion 13 of the side case 10L corresponding to the left support device 30L will be described. Fig. 16 is a diagram for explaining the details of structure of the supported portion 13 of the side case 10L. Fig. 16 shows a portion of the side case 10L being cut out from the perspective view of Fig. 9. Further, in Fig. 16, a partially enlarged cross sectional view of the rotation cover member 490 that is orthogonal to the third axis AX3 and the supported portion 13 as viewed downwardly from above is shown in the balloon.

As shown in Fig. 16, the supported portion 13 of the side case 10L is constituted by an inserted member 13a and a member holder 13b. The member holder 13b is formed of resin or metal having relatively high rigidity. More specifically, the member holder 13b has a degree of rigidity to which the member holder 13b is hardly deformed with luggage having a predetermined weight stored in the side case 10L. On the other hand, the inserted member 13a is formed of an elastic object such as rubber or a soft resin and has rigidity lower than that of the member holder 13b.

The member holder 13b is formed to have a concave shape that opens forwardly and downwardly. The inserted member 13a is held in the member holder 13b. The inserted member 13a has the above-mentioned concave portion CV that opens forwardly and downwardly while being held by the member holder 13b.

As shown in the cross section in the balloon of Fig. 16, the concave portion CV of the inserted member 13a has a first inner surface ia and a second inner surface ib facing each other when the insertion portion 491 of the rotation cover member 490 is inserted into the concave portion CV with the insertion portion 491 held therebetween. The first inner surface ia is directed leftwardly, and the second inner surface ib is directed rightwardly.

Here, as indicated by the outlined arrows in Fig. 16, an opening end of the concave portion CV in the cross section of the supported portion 13 orthogonal to the third axis AX3 is defined as a first position p1. Further, in the cross section of the supported portion 13 of Fig. 16, a second position p2, a third position p3 and a fourth position p4 are defined in this order from the opening end toward the bottom portion of the concave portion CV.

In this case, the concave portion CV is formed such that the distance between the first inner surface ia and the second inner surface ib (the distance in the left-and-right direction LR) gradually decreases from the first position p1 to the second position p2 and gradually increases from the second position p2 to the third position p3. Further, the concave portion CV is formed such that the distance between the first inner surface ia and the second inner surface ib gradually decreases from the third position p3 to the fourth position p4. Further, the concave portion CV is formed such that the distance between the first inner surface ia and the second inner surface ib is sufficiently larger than the thickness of the insertion portion 491 except for the fourth position p4.

With such a configuration, a clearance is formed between at least part of the insertion portion 491 and each of the first inner surface ia and the second inner surface ib of the concave portion CV with the insertion portion 491 inserted into the concave portion CV. The thickness of the insertion portion 491 is substantially constant as described above. Therefore, in the present example, the distance d1 of the clearance formed between the other surface 491b of the insertion portion 491 and the first inner surface ia gradually decreases from the first position p1 to the second position p2 and gradually increases from the second position p2 to the third position p3. Further, the distance d2 of the clearance formed between the one surface 491a of the insertion portion 491 and the second inner surface ib also gradually decreases from the first position p1 to the second position p2 and gradually increases from the second position p2 to the third position p3.

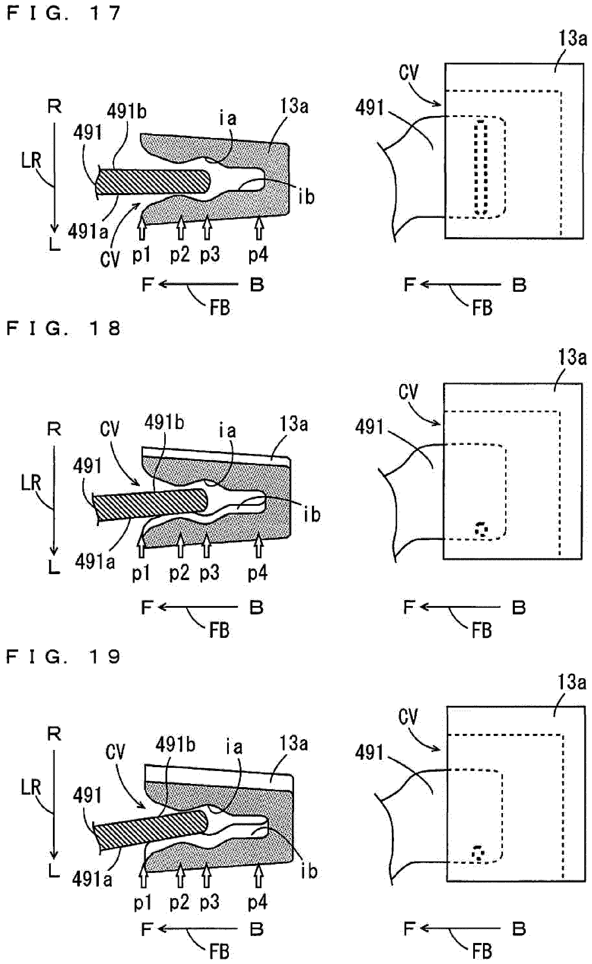

Figs. 17 to 19 are diagrams for explaining the operations of the insertion portion 491 and the inserted member 13a in a case where the side case 10L swings rightwardly from the reference state. In Figs. 17 to 19, a plurality of states of the insertion portion 491 and the inserted member 13a when the side case 10L is inclined rightwardly from the reference state are shown in order by enlarged cross sectional views as viewed downwardly from the above and the left side views. The enlarged cross sectional views shown in Figs. 17 to 19 are enlarged cross sectional views of the insertion portion 491 that is orthogonal to the third axis AX3 of Fig. 16, and the inserted member 13a.

As shown in Fig. 17, in the present example, when the side case 10L is in the reference state, the first inner surface ia and the second inner surface ib of the inserted member 13a are held to be in parallel with the third axis AX3. Further, in the concave portion CV, the one surface 491a of the insertion portion 491 and the second inner surface ib of the inserted member 13a come into contact with each other at the second position p2, and a clearance is formed between the other surface 491b of the insertion portion 491 and the first inner surface ia of the inserted member 13a. In this case, the one surface 491a and the other surface 491b of the insertion portion 491, and the first inner surface ia and the second inner surface ib of the inserted member 13a are in parallel with the third axis AX3 (Fig. 16). Thus, as indicated by the thick dotted line in the left side view of Fig. 17, the linear area aa2 (Fig. 14) of the insertion portion 491 comes into point-contact with the second inner surface ib. Therefore, the supporting state of the side case 10L by the support device 30L is stabilized.

As shown in Fig. 18, when the side case 10L swings rightwardly from the state of Fig. 17, the first inner surface ia and the second inner surface ib of the inserted member 13a are inclined with respect to the third axis AX3 (Fig. 16). Here, in the concave portion CV, the distance between the first inner surface ia and the second inner surface ib is the smallest at the second position p2. Therefore, in the cross section orthogonal to the third axis AX3, the insertion portion 491 rotates about the second position p2 in the concave portion CV. At this time, a clearance is formed between the other surface 491b of the insertion portion 491 and the first inner surface ia of the inserted member 13a. Therefore, the second inner surface ib of the inserted member 13a is inclined with respect to the one surface 491a of the insertion portion 491, whereby part of the lower end area aa1 of the insertion portion 491 of Fig. 14 comes into point-contact with the second inner surface ib as indicated by the thick dotted line in the left side view of Fig. 18. In this state, a force for attenuating swinging of the side case 10L is exerted on the inserted member 13a from the insertion portion 491.

As shown in Fig. 19, when the side case 10L further swings rightwardly from the state of Fig. 18, the first inner surface ia and the second inner surface ib of the inserted member 13a are further inclined with respect to the third axis AX3 (Fig. 16). Also in this state, as indicated by the thick dotted line in the left side view of Fig. 19, part of the lower end area aa1 of the insertion portion 491 of Fig. 14 is maintained in point-contact with the second inner surface ib. Further, a larger force for attenuating swinging of the side case 10L is exerted on the inserted member 13a from the insertion portion 491.

As described above, in a case where the side case 10L swings rightwardly, the larger a degree of swinging of the side case 10L is, the larger a force to be exerted on the side case 10L from the insertion portion 491 is. Thus, swinging of the side case 10L is efficiently attenuated in accordance with the magnitude of swinging.

While the side case 10L swings rightwardly in the example of Figs. 17 to 19, in a case where the side case 10L swings leftwardly, the other surface 491b of the insertion portion 491 comes into contact with the inner surface ia of the inserted member 13a. More specifically, in the cross section orthogonal to the third axis AX3, the insertion portion 491 rotates about the second position p2 in the concave portion CV. Thus, part of the lower end area ab1 of the insertion portion 491 of Fig. 15 comes into point-contact with the first inner surface ia. In this state, a force for attenuating swinging of the side case 10L is exerted on the inserted member 13a from the insertion portion 491, and swinging of the side case 10L is efficiently attenuated.

The positional relationship between the insertion portion 491 and the inserted member 13a when the side case 10L is in the reference state may be set such that the other surface 491b of the insertion portion 491 and the first inner surface ia of the inserted member 13a come into contact with each other at the second position p2. In this case, when the side case 10L is in the reference state, the linear area ab2 of the insertion portion 491 of Fig. 15 linearlycomes into contact with the first inner surface ia.

Also in regard to the right support device 30R and the side case 10R, swinging of the side case 10R is efficiently attenuated by basically the same mechanism as those of the above-mentioned left support device 30L and the side case 10L.

### [6] Attachment and Detachment of Side Cases 10L, 10R

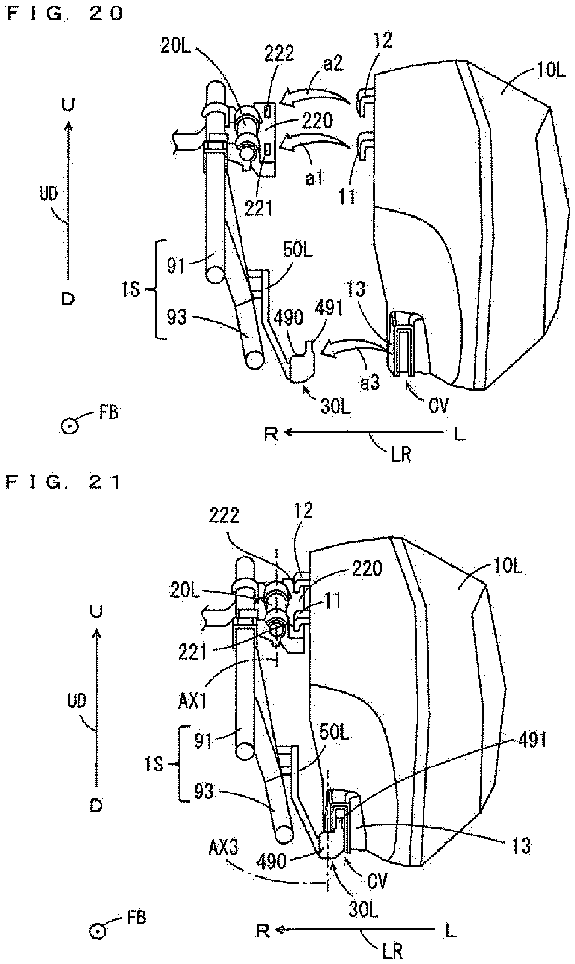

Figs. 20 and 21 are diagrams for explaining attachment and detachment of the side case 10L with respect to the sub-frame 1S. In Fig. 20, the side case 10L being detached from the left upper rail 91 is shown. As indicated by the outlined arrows a1, a2 in Fig. 20, with the side case 10L detached from the sub-frame 1S, the attachment portions 11, 12 of the side case 10L are inserted into the attachment holes 221, 222 of the rotation support mechanism 20L. Further, as indicated by the outlined arrow a3 in Fig. 20, the insertion portion 491 of the rotation cover member 490 of the support device 30L is inserted into the concave portion CV of the side case 10L. Thus, as shown in Fig. 21, the side case 10L is attached to the sub-frame 1S.

On the other hand, with the side case 10L attached to the sub-frame 1S, the attachment portions 11, 12 of the side case 10L are pulled out of the attachment holes 221, 222 of the rotation support mechanism 20L. Further, the insertion portion 491 of the rotation cover member 490 of the support device 30L is pulled out of the concave portion CV of the side case 10L. Thus, the side case 10L is detached from the sub-frame 1S.

The right side case 10R can also be attached to and detached from the sub-frame 1S in the procedure similar to that of the example of the left side case 10L of Figs. 20 and 21.

### [7] Effects

(1) In the above-mentioned motorcycle 100, the side case devices 900L, 900R are provided at both of the left and right side portions. In the side case devices 900L, 900R, the side cases 10L, 10R are attachable to and detachable from the body frame 1 by the rotation support mechanisms 20L, 20R and the support devices 30L, 30R.

Each of the support devices 30L, 30R includes the bolt BT3. The bolt BT3 is fixed to the body frame 1 to extend upwardly and downwardly. The rotation cover member 490 is supported at the bolt BT3 to be rotatable about the third axis X3 passing through the central axis of the bolt BT3 via the inner outer cylindrical damper 410 and the coupling member 420. The insertion portion 491 of the rotation cover member 490 is inserted into the concave portion CV of each of the side cases 10L, 10R. With the insertion portion 491 inserted into the concave portion CV, a clearance is formed between the concave portion CV and the insertion portion 491.

When each of the side cases 10L, 10R swings leftwardly and rightwardly of the motorcycle 100, the insertion portion 491 inserted into the concave portion CV swings about the third axis AX3 together with each of the side cases 10L, 10R. Thus, a relative rotational force is generated between the rotation cover member 490 and the bolt BT3. Part of this rotational force is absorbed by the inner outer cylindrical damper 410. Therefore, swinging of the side cases 10L, 10R is attenuated.

In the cross section of the concave portion CV and the insertion portion 491 of each of the side cases 10L, 10R that is orthogonal to the third axis AX3, the size of the clearance between the concave portion CV and the insertion portion 491 decreases gradually from the first position p1 to the second position p2 and increases gradually from the second position p2 to the third position p3. In this case, because rotation of the insertion portion 491 about the second position p2 is allowed in the concave portion CV in the above-mentioned cross section, the contact state where the inner surface of the concave portion CV is in contact with the insertion portion 491 is likely to be maintained at the second position p2 when the insertion portion 491 swings. Thus, when each of the side cases 10L, 10R swings, repeated contact and separation between the inner surface of the concave portion CV and the insertion portion 491 is suppressed, and the shock generated between the concave portion CV and the insertion portion 491 is mitigated. Therefore, deterioration of the concave portion CV and the insertion portion 491 is suppressed, and swinging of the side cases 10L, 10R is smoothly attenuated. In this case, with the side cases 10L, 10R attached to the motorcycle 100, swinging of the vehicle main body due to swinging of the side cases 10L, 10R is suppressed.

As a result, in the above-mentioned motorcycle 100, the loadable capacity of luggage is increased, and generation of the weave mode is suppressed, due to the side case devices 900L, 900R. Therefore, the motorcycle 100 is not restricted in regard to the traveling speed that causes the weave mode.

(2) In the supported portion 13 of each of the above-mentioned side cases 10L, 10R, the insertion portion 491 formed of metal is inserted into the concave portion CV of the inserted member 13a formed of an elastic object. Thus, when each of the side cases 10L, 10R swings leftwardly and rightwardly with the insertion portion 491 inserted into the concave portion CV, the shock generated between the concave portion CV and the insertion portion 491 is reduced. Further, because the rotation cover member 490 is formed of metal, strength required to support each of the side cases 10L, 10R is ensured in each of the support devices 30L, 30R.

(3) In each of the above-mentioned support devices 30L, 30R, the rotation cover member 490 is attached to the coupling member 420 with the plurality of bolts BT4. Thus, the rotation cover member 490 is attachable to and detachable from the coupling member 420. Therefore, in a case where the insertion portion 491 of the rotation cover member 490 is deteriorated, the rotation cover member 490 can be easily replaced with a new rotation cover member 490.

### [8] Fixing Function of Side Cases 10L, 10R

The side case devices 900L, 900R according to the present embodiment further have a fixing function for rigidly fixing the side cases 10L, 10R to both of the left and right side portions of the motorcycle 100. The fixing function of the side cases 10L, 10R will be described below.

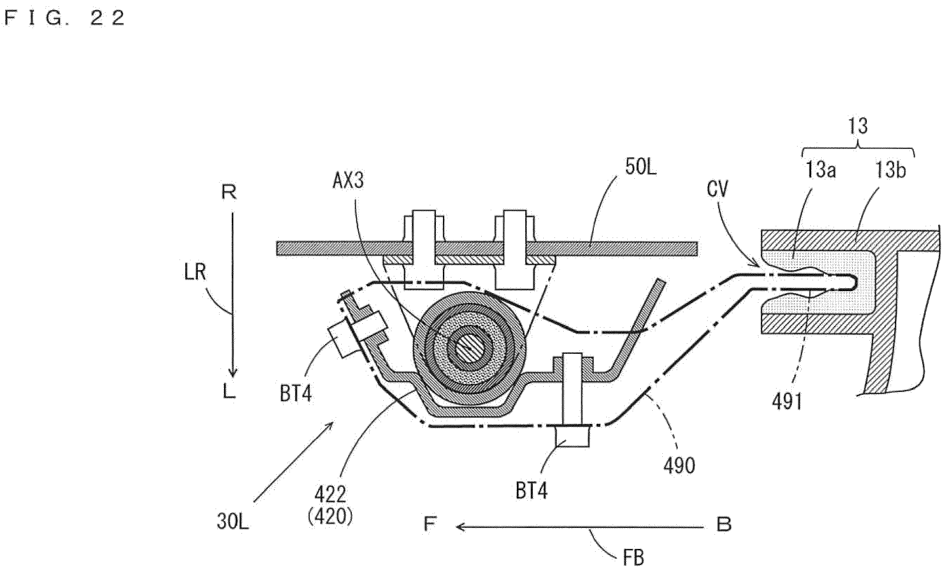

Fig. 22 is a diagram for explaining the fixing function of the side cases 10L, 10R by the side case devices 900L, 900R. In Fig. 22, the cross sectional view of the support device 30L and the supported portion 13 corresponding to the example of Fig. 12 is shown.

In the present embodiment, the bottom portion of the concave portion CV in the supported portion 13 is configured such that the tip (rear end) of the insertion portion 491 can be fitted to the bottom portion of the concave portion CV. Thus, as shown in the example of Fig. 22, in a case where the rotation cover member 490, which is formed such that the insertion portion 491 reaches the bottom portion of the concave portion CV, is attached to the coupling member 420, the insertion portion 491 is to be fitted to the bottom portion of the concave portion CV. At this time, the insertion portion 491 is fixed to the inside of the supported portion 13, and a relative movement between the rotation cover member 490 and the supported portion 13 is restricted. Thus, the side cases 10L, 10R are fixed rigidly to both of the left and right side portions of the motorcycle 100.

In this manner, in each of the side case devices 900L, 900R according to the present embodiment, the rotation cover member 490, which is formed such that the insertion portion 491 reaches the bottom portion of the concave portion CV, is used. Thus, the side cases 10L, 10R can be fixed rigidly to the body frame 1 of the motorcycle 100. On the other hand, as shown in the example of Fig. 12, the rotation cover member 490, which is formed such that the insertion portion 491 does not reach the bottom portion of the concave portion CV, is used. Thus, the side cases 10L, 10R can be attached to the vehicle main body to be swingable leftwardly and rightwardly. Therefore, the attachment state of each of the side cases 10L, 10R with respect to the vehicle main body of the motorcycle 100 can be switched in accordance with the type of the rotation cover member 490 to be used in each of the support devices 30L, 30R.

The coupling member 420 of each of the support devices 30L, 30R may be configured such that the position of the rotation cover member 490 in the front-and-rear direction FB is adjustable. Specifically, the coupling member 420 may be configured to be able to adjust the position of the rotation cover member 490 between the position at which the rear end of the insertion portion 491 is fitted to the bottom portion of the concave portion CV and the position at which the rear end of the insertion portion 491 is arranged between the opening end and the bottom portion of the concave portion CV. In this case, the position of the rotation cover member 490 is adjusted, so that the attachment state of the side cases 10L, 10R with respect to the vehicle main body of the motorcycle 100 can be switched.

In the present embodiment, the bottom portion of the concave portion CV does not have to be configured such that the insertion portion 491 can be fitted to the bottom portion of the concave portion CV. That is, in the side cases 900L, 900R according to the present embodiment, the fixing function of the side cases 10L, 10R does not have to be provided. In this case, the side cases 10L, 10R are not fixed rigidly to the vehicle main body of the motorcycle 100.

### [9] Other Embodiments

(1) The concave portion CV according to the above-mentioned embodiment is formed such that the size of the clearance between the first inner surface ia and the second inner surface ib gradually decreases from the first position p1 to the second position p2 and gradually increases from the second position p2 to the third position p3 in the cross section orthogonal to the third axis AX3. Meanwhile, the insertion portion 491 has a substantially constant thickness in the cross section orthogonal to the third axis AX3.
   The present teaching is not limited to the above-mentioned example. The concave portion CV may be formed such that the distance between the first inner surface ia and the second inner surface ib is substantially constant from the first position p1 to the third position p3 in the cross section orthogonal to the third axis AX3. In this case, the insertion portion 491 is formed such that the thickness in the left-and-right direction LR gradually increases from the first position p1 to the second position p2 and gradually decreases from the second position p2 to the third portion p3 in the cross section orthogonal to the third axis AX3. Thus, in the cross section of the concave portion CV and the insertion portion 491, the size of the clearance between the concave portion CV and the insertion portion 491 gradually decreases from the first position p1 to the second position p2 and gradually increases from the second position p2 to the third position p3 similarly to the example of the above-mentioned embodiment. Therefore, the effects similar to that of the above-mentioned embodiment can be obtained.
(2) While the pair of left and right side case devices 900L, 900R are provided at both of the left and right side portions in the motorcycle 100 according to the above-mentioned embodiment, the present teaching is not limited to this. In the motorcycle 100, the side case device 900L may be provided at the left side portion, but the side case device 900R does not have to be provided at the right side portion. Further, in the motorcycle 100, the side case device 900L does not have to be provided at the left side portion, but the side case device 900R may be provided at the right side portion. Even in these cases, generation of the weave mode caused by the side case devices attached to the motorcycle 100 is suppressed.
(3) While the inner outer cylindrical damper 301 is provided at each of the rotation support mechanisms 20L, 20R in the motorcycle 100 according to the above-mentioned embodiment, the present teaching is not limited to this. Each of the rotation support mechanisms 20L, 20R may be configured such that each of the side cases 10L, 10R attached to the rotation member 200 is supported to be rotatable with respect to the upper rail 91. Therefore, the inner outer cylindrical damper 301 does not have to be provided at each of the rotation support mechanisms 20L, 20R. In this case, the configuration of the rotation support mechanisms 20L, 20R is simplified.
(4) While the first axis AX1 extends in parallel with the central axis of the left upper rail 91 in the motorcycle 100 according to the above-mentioned embodiment, the present teaching is not limited to this. The direction in which the first axis AX1 extends may be inclined with respect to the central axis of the left upper rail 91. Further, while the second axis AX2 extends in parallel with the central axis of the right upper rail 91 in the motorcycle 100 according to the above-mentioned embodiment, the present teaching is not limited to this. The direction in which the second axis AX2 extends may be inclined with respect to the central axis of the right upper rail 91.
(5) While the rubber bush 412 is provided in the inner outer cylindrical damper 410 provided at each of the above-mentioned support devices 30L, 30R to absorb a rotational force generated between the bolt BT3 and the rotation cover member 490, the present teaching is not limited to this. In the inner outer cylindrical damper 410, another elastic member such as a spring may be provided instead of the rubber bush 412 as the configuration for absorbing a rotational force generated between the bolt BT3 and the rotation cover member 490.
(6) Each of the support devices 30L, 30R according to the above-mentioned embodiment does not have to be configured such that the rotation cover member 490 is attachable to and detachable from the coupling member 420. For example, in each of the support devices 30L, 30R, the coupling member 420 and the rotation cover member 490 may be connected to each other to be inseparable.
(7) In each of the support devices 30L, 30R according to the above-mentioned embodiment, the coupling member 420 may be constituted only by the cylindrical member 421. That is, the strip-shaped member 422 for restricting the rotation of the rotation cover member 490 does not have to be provided. In this case, the rotation cover member 490 is directly connected to the cylindrical member 421, for example.
(8) While the above-mentioned embodiment is an example in which the present teaching is applied to the motorcycle, the present teaching is not limited to this. The present teaching may be applied to another mobile object such as a four-wheeled automobile, a motor tricycle, a boat, a water bike, a snow mobile or an ATV (All Terrain Vehicle).

### [10] Correspondences between Constituent Elements in Claims and Parts in Preferred Embodiments

In the following paragraphs, non-limiting examples of correspondences between various elements recited in the claims below and those described above with respect to various preferred embodiments of the present disclosure are explained.

In the above-mentioned embodiment, the motorcycle 100 is an example of a mobile object, the side case devices 900L, 900R are an example of a side case device, the concave portion CV is an example of a concave portion, the side cases 10L, 10R are an example of a side case, the bolt bT3 is an example of a shaft member, the insertion portion 491 is an example of an insertion portion and the rotation cover member 490 is an example of a rotation member.

Further, the inner outer cylindrical damper 410 is an example of a damper, the first position p1 is an example of a first position, the second position p2 is an example of a second position, the third position p3 is an example of a third position, the first inner surface ia is an example of a first inner surface, the second inner surface ib is an example of a second inner surface, the other surface 491b of the insertion portion 491 is an example of a first outer surface, and the one surface 491a of the insertion portion 491 is an example of a second outer surface.

Further, the coupling member 420 is an example of a coupling member, the first portion 422a and the second portion 422b of the strip-shaped member 422 are an example of a rotation restrictor, the inner cylinder 411 is an example of an inner cylinder, the rubber bush 412 is an example of a rubber bush, the outer cylinder 413 is an example of an outer cylinder, the support devices 30L, 30R are an example of a support device, and the case main bodies CML, CMR are an example of a case main body.

## Claims

1. A side case device (900L,900R) that is attachable to a mobile object, comprising:
a side case (10L,10R) that is configured to be attached to a side portion of the mobile object to be swingable leftwardly and rightwardly, is configured to be detached from the side portion of the mobile object and has a concave portion (CV) that opens forwardly;
a shaft member (BT3) configured to be fixable to the side portion of the mobile object to extend upwardly and downwardly; and
a rotation member (490) that is supported at the shaft member (BT3) to be rotatable about the shaft member (BT3) and has an insertion portion (491) to be inserted into the concave portion (CV) of the side case (10L,10R), wherein
with the insertion portion (491) inserted into the concave portion (CV), a cross section, which is orthogonal to an axial center of the shaft member (BT3), of the concave portion (CV) and the insertion portion (491) is defined, an opening end of the concave portion (CV) in the cross section is defined as a first position (p1), and a second position (p2) and a third position (p3) that are closer to a bottom portion of the concave portion (CV) than the first position (p1) are defined in this order, **characterized in that** the side case device (900L,900R) further comprises a damper (410) provided between the shaft member (BT3) and the rotation member (490), wherein the concave portion (CV) and the insertion portion (491) are formed such that a size of a clearance between the concave portion (CV) and the insertion portion (491) in the cross section gradually decreases from the first position (p1) to the second position (p2) and gradually increases from the second position (p2) to the third position (p3).

2. The side case device (900L,900R) according to claim 1, wherein the concave portion (CV) has first and second inner surfaces (ia,ib), which sandwich the insertion portion (491) of the rotation member (490) and face each other in the cross section with the insertion portion (491) inserted into the concave portion (CV), and
the concave portion (CV) is formed such that a distance between the first inner surface (ia) and the second inner surface (ib) in the cross section gradually decreases from the first position (p1) to the second position (p2) and gradually increases from the second position (p2) to the third position (p3).

3. The side case device (900L,900R) according to claim 2, wherein the insertion portion (491) has first and second outer surfaces (491a,491b) respectively facing the first and second inner surfaces (ia,ib) in the concave portion (CV) with the insertion portion (491) inserted into the concave portion (CV), and
the concave portion (CV) and the insertion portion (491) are formed such that at least one of the first and second inner surfaces (ia,ib) linearly comes into contact with at least one of the first and second outer surfaces (491a,491b) when the side case (10L,10R) is in a predetermined attitude with respect to the mobile object.

4. The side case device (900L,900R) according to claim 2 or 3, wherein the first and second inner surfaces (ia,ib) of the concave portion (CV) of the side case (10L,10R) are formed of an elastic object (13a), and
the insertion portion (491) is formed of metal.

5. The side case device (900L,900R) according to any one of claims 1 to 4, further comprising a coupling member (420) that couples the damper (410) to the rotation member (490), and
the rotation member (490) is configured to be attachable to and detachable from the coupling member (420).

6. The side case device (900L,900R) according to claim 5, wherein the coupling member (420) has a rotation restrictor (422a,422b) that restricts rotation of the rotation member (490) with respect to the shaft member (BT3) to a predetermined angular range.

7. The side case device (900L,900R) according to any one of claims 1 to 6, wherein a bottom portion of the concave portion (CV) is configured such that a tip of the insertion portion (491) is fittable to the bottom portion with the insertion portion (491) inserted into the concave portion (CV), and a relative movement between the rotation member (490) and the side case (10L,10R) is restricted with the tip of the insertion portion (491) fitted to the bottom portion of the concave portion (CV).

8. The side case device (900L,900R) according to any one of claims 1 to 7, wherein the damper (410) includes
an inner cylinder (411) into which the shaft member (BT3) is inserted,
a rubber bush (412) provided to surround an outer peripheral surface of the inner cylinder (411), and
an outer cylinder (413) that is provided to surround the rubber bush (412) and fixed to the rotation member (490).

9. A mobile object comprising the side case device (900L,900R) according to any one of claims 1 to 8.

10. A side case (10L,10R) that is attachable to a mobile object using a support device (30L,30R),
the support device (30L,30R) comprising:
a shaft member (BT3) configured to be fixable to a side portion of the mobile object to extend upwardly and downwardly;
a rotation member (490) that is supported at the shaft member (BT3) to be rotatable about the shaft member (BT3) and has an insertion portion (491); and
the side case (10L,10R) comprising a case main body (CML,CMR) that is configured to be attached to the side portion of the mobile object to be swingable leftwardly and rightwardly, is configured to be detached from the side portion of the mobile object and has a concave portion (CV) that opens forwardly and into which the insertion portion (491) is to be inserted, wherein
with the insertion portion (491) inserted into the concave portion (CV), a cross section, which is orthogonal to an axial center of the shaft member (BT3), of the concave portion (CV) and the insertion portion (491) is defined, an opening end of the concave portion (CV) in the cross section is defined as a first position (p1), and a second position (p2) and a third position (p3) that are closer to a bottom portion of the concave portion (CV) than the first position (p1) are defined in this order, **characterized in that** the support device (30L,30R) further comprises a damper (410) provided between the shaft member (BT3) and the rotation member (490), wherein a size of a clearance between the concave portion (CV) and the insertion portion (491) in the cross section gradually decreases from the first position (p1) to the second position (p2) and gradually increases from the second position (p2) to the third position (p3).

## Patentansprüche

1. Eine Seitenkoffervorrichtung (900L, 900R), die an einem bewegbaren Objekt anbringbar ist, umfasst:
einen Seitenkoffer (10L, 10R), der konfiguriert ist, um an einem Seitenabschnitt des bewegbaren Objekts anbringbar zu sein, um nach links und nach rechts schwenkbar zu sein, ist konfiguriert, so dass er von dem Seitenabschnitt des bewegbaren Objekts abnehmbar ist, und einen konkaven Abschnitt (CV) hat, der sich nach vorne öffnet;
ein Wellenelement (BT3), das konfiguriert ist, um an dem Seitenabschnitt des bewegbaren Objekts befestigbar zu sein, um sich nach oben und nach unten zu erstrecken; und
ein Rotationselement (490), das an dem Wellenelement (BT3) gelagert ist, um um das Wellenelement (BT3) drehbar zu sein, und einen Einsetzabschnitt (491) hat, um in den konkaven Abschnitt (CV) des Seitenkoffers (10L, 10R) eingesetzt zu werden, wobei
bei in den konkaven Abschnitt (CV) eingesetztem Einsetzabschnitt (491) ein Querschnitt des konkaven Abschnitts (CV) und des Einsetzabschnitts (491) definiert ist, der orthogonal zu einer axialen Mitte des Wellenelements (BT3) ist, ein Öffnungsende des konkaven Abschnitts (CV) in dem Querschnitt als eine erste Position (p1) definiert ist, und eine zweite Position (p2) und eine dritte Position (p3), die näher an einem Bodenabschnitt des konkaven Abschnitts (CV) als die erste Position (p1) sind, in dieser Reihenfolge definiert sind, **dadurch gekennzeichnet, dass** die Seitenkoffervorrichtung (900L, 900R) weiterhin einen Dämpfer (410) aufweist, der zwischen dem Wellenelement (BT3) und dem Rotationselement (490) vorgesehen ist, wobei der konkave Abschnitt (CV) und der Einsetzabschnitt (491) ausgebildet sind, so dass eine Größe eines Zwischenraums zwischen dem konkaven Abschnitt (CV) und dem Einsetzabschnitt (491) im Querschnitt von der ersten Position (p1) zur zweiten Position (p2) allmählich abnimmt und von der zweiten Position (p2) zur dritten Position (p3) allmählich zunimmt.

2. Die Seitenkoffervorrichtung (900L, 900R) gemäß Anspruch 1, wobei der konkave Abschnitt (CV) eine erste und eine zweite Innenfläche (ia, ib) hat, die den Einsetzabschnitt (491) des Rotationselements (490) sandwichartig einschließen und im Querschnitt einander zugewandt sind, wenn der Einsetzabschnitt (491) in den konkaven Abschnitt (CV) eingesetzt ist, und
der konkave Abschnitt (CV) ausgebildet ist, so dass ein Abstand zwischen der ersten Innenfläche (ia) und der zweiten Innenfläche (ib) im Querschnitt von der ersten Position (p1) zur zweiten Position (p2) allmählich abnimmt und von der zweiten Position (p2) zur dritten Position (p3) allmählich zunimmt.

3. Die Seitenkoffervorrichtung (900L, 900R) gemäß Anspruch 2, wobei der Einsetzabschnitt (491) eine erste und eine zweite Außenfläche (491a, 491b) hat, die jeweils der ersten und der zweiten Innenfläche (ia, ib) in dem konkaven Abschnitt (CV) zugewandt sind, wenn der Einsetzabschnitt (491) in den konkaven Abschnitt (CV) eingesetzt ist, und
der konkave Abschnitt (CV) und der Einsetzabschnitt (491) sind geformt, so dass zumindest eine der ersten und zweiten Innenflächen (ia, ib) linear in Kontakt mit zumindest einer der ersten und zweiten Außenflächen (491a, 491b) kommt, wenn sich der Seitenkoffer (10L, 10R) in einer vorbestimmten Lage in Bezug auf das bewegbare Objekt befindet.

4. Die Seitenkoffervorrichtung (900L, 900R) gemäß Anspruch 2 oder 3, wobei die ersten und zweiten Innenflächen (ia, ib) des konkaven Abschnitts (CV) des Seitenkoffers (10L, 10R) aus einem elastischen Objekt (13a) gebildet sind, und
der Einsetzabschnitt (491) aus Metall gebildet ist.

5. Die Seitenkoffervorrichtung (900L, 900R) gemäß irgendeinem der Ansprüche 1 bis 4, die weiterhin ein Kopplungselement (420) umfasst, das den Dämpfer (410) mit dem Rotationselement (490) koppelt, und
das Rotationselement (490) konfiguriert ist, so dass es an dem Kopplungselement (420) anbringbar und von diesem abnehmbar ist.

6. Die Seitenkoffervorrichtung (900L, 900R) gemäß Anspruch 5, wobei das Kopplungselement (420) einen Drehbegrenzer (422a, 422b) hat, der die Drehung des Rotationselements (490) in Bezug auf das Wellenelement (BT3) auf einen vorbestimmten Winkelbereich begrenzt.

7. Die Seitenkoffervorrichtung (900L, 900R) gemäß irgendeinem der Ansprüche 1 bis 6, wobei ein Bodenabschnitt des konkaven Abschnitts (CV) konfiguriert ist, so dass eine Spitze des Einsetzabschnitts (491) an den Bodenabschnitt einsetzbar ist, wenn der Einsetzabschnitt (491) in den konkaven Abschnitt (CV) eingesetzt ist, und eine Relativbewegung zwischen dem Rotationselement (490) und dem Seitenkoffer (10L, 10R) beschränkt ist, wenn die Spitze des Einsetzabschnitts (491) an den Bodenabschnitt des konkaven Abschnitts (CV) eingesetzt ist.

8. Die Seitenkoffervorrichtung (900L, 900R) gemäß irgendeinem der Ansprüche 1 bis 7, wobei der Dämpfer (410) enthält
einen Innenzylinder (411), in den das Wellenelement (BT3) eingesetzt ist,
eine Gummibuchse (412), die vorgesehen ist, um eine äußere Umfangsfläche des Innenzylinders (411) zu umgeben, und
einen Außenzylinder (413), der vorgesehen ist, um die Gummibuchse (412) zu umgeben, und der an dem Rotationselement (490) befestigt ist.

9. Ein bewegbares Objekt mit der Seitenkoffervorrichtung (900L, 900R) gemäß irgendeinem der Ansprüche 1 bis 8.

10. Ein Seitenkoffer (10L, 10R), der unter Verwendung einer Haltevorrichtung (30L, 30R) an einem bewegbaren Objekt befestigbar ist,
die Stützvorrichtung (30L, 30R) umfasst:
ein Wellenelement (BT3), das konfiguriert ist, um an einem Seitenabschnitt des bewegbaren Objekts befestigt zu werden, um sich nach oben und nach unten zu erstrecken;
ein Rotationselement (490), das an dem Wellenelement (BT3) gelagert ist, um um das Wellenelement (BT3) drehbar zu sein, und einen Einsetzabschnitt (491) hat; und der Seitenkoffer (10L, 10R) einen Kofferhauptkörper (CML, CMR) umfasst, der konfiguriert ist, so dass er an dem Seitenabschnitt des bewegbaren Objekts anbringbar ist, um nach links und nach rechts schwenkbar zu sein, der konfiguriert ist, so dass er von dem Seitenabschnitt des bewegbaren Objekts abnehmbar ist, und der einen konkaven Abschnitt (CV) hat, der sich nach vorne öffnet und in den der Einsetzabschnitt (491) einsetzbar ist, wobei
wenn der Einsetzabschnitt (491) in den konkaven Abschnitt (CV) eingesetzt ist, ein Querschnitt, der orthogonal zu einer axialen Mitte des Wellenelements (BT3) ist, des konkaven Abschnitts (CV) und des Einsetzabschnitts (491) definiert ist, ein Öffnungsende des konkaven Abschnitts (CV) in dem Querschnitt als eine erste Position (p1) definiert ist, und eine zweite Position (p2) und eine dritte Position (p3), die näher an einem Bodenabschnitt des konkaven Abschnitts (CV) liegen als die erste Position (p1), in dieser Reihenfolge definiert sind **dadurch gekennzeichnet, dass** die Stützvorrichtung (30L, 30R) weiterhin einen Dämpfer (410) umfasst, der zwischen dem Wellenelement (BT3) und dem Rotationselement (490) vorgesehen ist, wobei eine Größe eines Zwischenraums zwischen dem konkaven Abschnitt (CV) und dem Einsetzabschnitt (491) im Querschnitt von der ersten Position (p1) zur zweiten Position (p2) allmählich abnimmt und von der zweiten Position (p2) zur dritten Position (p3) allmählich zunimmt.

## Revendications

1. Dispositif de valise latérale (900L, 900R) attachable à un objet mobile, comprenant :
une valise latérale (10L, 10R) qui est configurée pour être attachée à une portion latérale de l'objet mobile afin de pouvoir basculer vers la gauche et vers la droite, qui est configurée pour être détachée de la portion latérale de l'objet mobile, et qui comporte une portion concave (CV) qui s'ouvre vers l'avant ;
un élément d'axe (BT3) configuré pour être montable sur la portion latérale de l'objet mobile afin de s'étendre vers le haut et vers le bas ; et
un élément de rotation (490) qui est supporté sur l'élément d'axe (BT3) pour être rotatif autour de l'élément d'axe (BT3) et qui comporte une portion d'insertion (491) à insérer dans la portion concave (CV) de la valise latérale (10L, 10R), dans lequel
avec la portion d'insertion (491) insérée dans la portion concave (CV), une section transversale, orthogonale à un centre axial de l'élément d'axe (BT3), de la portion concave (CV) et de la portion d'insertion (491) est définie, une extrémité d'ouverture de la portion concave (CV) dans la section transversale est définie comme une première position (p1), et une deuxième position (p2) et une troisième position (p3) qui sont plus proches d'une portion inférieure de la portion concave (CV) que la première position (p1) sont définies dans cet ordre, **caractérisé en ce que** le dispositif de valise latérale (900L, 900R) comprend en outre un amortisseur (410) pourvu entre l'élément d'axe (BT3) et l'élément de rotation (490), dans lequel la portion concave (CV) et la portion d'insertion (491) sont formées de telle sorte que la taille d'un intervalle entre la portion concave (CV) et la portion d'insertion (491) dans la section transversale diminue graduellement de la première position (p1) à la deuxième position (p2) et augmente graduellement de la deuxième position (p2) à la troisième position (p3).

2. Dispositif de valise latérale (900L, 900R) selon la revendication 1, dans lequel la portion concave (CV) comporte des première et deuxième surfaces internes (ia, ib), entre lesquelles est intercalée la portion d'insertion (491) de l'élément de rotation (490) et qui se font face dans la section transversale avec la portion d'insertion (491) insérée dans la portion concave (CV), et
la portion concave (CV) est formée de telle sorte que la distance entre la première surface interne (ia) et la deuxième surface interne (ib) dans la section transversale diminue graduellement de la première position (p1) à la deuxième position (p2) et augmente graduellement de la deuxième position (p2) à la troisième position (p3).

3. Dispositif de valise latérale (900L, 900R) selon la revendication 2, dans lequel la portion d'insertion (491) comporte des première et deuxième surfaces externes (491a, 491b) faisant respectivement face aux première et deuxième surfaces internes (ia, ib) dans la portion concave (CV), avec la portion d'insertion (491) insérée dans la portion concave (CV), et
la portion concave (CV) et la portion d'insertion (491) sont formées de telle sorte qu'au moins l'une des première et deuxième surfaces internes (ia, ib) vient linéairement en contact avec au moins l'une des première et deuxième surfaces externes (491a, 491b) quand la valise latérale (10L, 10R) se trouve dans une attitude prédéterminée par rapport à l'objet mobile.

4. Dispositif de valise latérale (900L, 900R) selon la revendication 2 ou 3, dans lequel les première et deuxième surfaces internes (ia, ib) de la portion concave (CV) de la valise latérale (10L, 10R) sont conformées comme un objet élastique (13a), et
la portion d'insertion (491) est constituée de métal.

5. Dispositif de valise latérale (900L, 900R) selon l'une quelconque des revendications 1 à 4, comprenant en outre un élément d'accouplement (420) qui couple l'amortisseur (410) à l'élément de rotation (490), et
dans lequel l'élément de rotation (490) est configuré pour être attachable à l'élément d'accouplement (420) et détachable de celui-ci.

6. Dispositif de valise latérale (900L, 900R) selon la revendication 5, dans lequel l'élément d'accouplement (420) comporte un limiteur de rotation (422a, 422b) qui limite la rotation de l'élément de rotation (490) par rapport à l'élément d'axe (BT3) à une plage angulaire prédéterminée.

7. Dispositif de valise latérale (900L, 900R) selon l'une quelconque des revendications 1 à 6, dans lequel une portion inférieure de la portion concave (CV) est configurée de telle sorte qu'une pointe de la portion d'insertion (491) peut être ajustée à la portion inférieure avec la portion d'insertion (491) insérée dans la portion concave (CV), et un mouvement relatif entre l'élément de rotation (490) et la valise latérale (10L, 10R) est limité par la pointe de la portion d'insertion (491) ajustée à la portion inférieure de la portion concave (CV).

8. Dispositif de valise latérale (900L, 900R) selon l'une quelconque des revendications 1 à 7, dans lequel l'amortisseur (410) comprend
un cylindre interne (411) dans lequel l'élément d'axe (BT3) est inséré,
un coussinet en caoutchouc (412) pourvu pour entourer une surface périphérique externe du cylindre interne (411), et
un cylindre externe (413) pourvu pour entourer le coussinet en caoutchouc (412) et fixé à l'élément de rotation (490) .

9. Objet mobile comprenant le dispositif de valise latérale (900L, 900R) selon l'une quelconque des revendications 1 à 8.

10. Valise latérale (10L, 10R) attachable à un objet mobile à l'aide d'un dispositif de support (30L, 30R), le dispositif de support (30L, 30R) comprenant :
un élément d'axe (BT3) configuré pour être montable sur une portion latérale de l'objet mobile afin de s'étendre vers le haut et vers le bas ;
un élément de rotation (490) qui est supporté sur l'élément d'axe (BT3) pour pouvoir tourner autour de l'élément d'axe (BT3) et qui comporte une portion d'insertion (491) ; et
la valise latérale (10L, 10R) comprenant un corps principal de valise (CML, CMR) qui est configuré pour être fixé à la portion latérale de l'objet mobile pour pouvoir basculer vers la gauche et vers la droite, qui est configuré pour être détaché de la portion latérale de l'objet mobile, et qui comporte une portion concave (CV) qui s'ouvre vers l'avant et dans laquelle doit être insérée la portion d'insertion (491), dans laquelle
avec la portion d'insertion (491) insérée dans la portion concave (CV), une section transversale, orthogonale à un centre axial de l'élément d'axe (BT3), de la portion concave (CV) et de la portion d'insertion (491) est définie, une extrémité d'ouverture de la portion concave (CV) dans la section transversale est définie comme une première position (p1), et une deuxième position (p2) et une troisième position (p3) qui sont plus proches d'une portion inférieure de la portion concave (CV) que la première position (p1) sont définies dans cet ordre, **caractérisée en ce que** le dispositif de support (30L, 30R) comprend en outre un amortisseur (410) pourvu entre l'élément d'axe (BT3) et l'élément de rotation (490), dans laquelle la taille d'un intervalle entre la portion concave (CV) et la portion d'insertion (491) dans la section transversale diminue graduellement de la première position (p1) à la seconde position (p2) et augmente graduellement de la deuxième position (p2) à la troisième position (p3).
